(19) Europäisches Patentamt
European Patent Office
Office européen des brevets

(11) **EP 2 922 414 B1**

(12) **EUROPEAN PATENT SPECIFICATION**

(45) Date of publication and mention
of the grant of the patent:
**13.11.2019 Bulletin 2019/46**

(51) Int Cl.:
***A23L 33/00*** *(2016.01)*   ***A23L 33/175*** *(2016.01)*

(21) Application number: **12798433.4**

(22) Date of filing: **23.11.2012**

(86) International application number:
**PCT/NL2012/050832**

(87) International publication number:
**WO 2014/081284 (30.05.2014 Gazette 2014/22)**

(54) **FORMULAS COMPRISING OPTIMISED AMINO ACID PROFILES**

FORMULIERUNGEN MIT OPTIMIERTEN AMINOSÄUREPROFILEN

FORMULES COMPRENANT DES PROFILS D'ACIDES AMINÉS OPTIMISÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.09.2015 Bulletin 2015/40**

(73) Proprietor: **N.V. Nutricia
2712 HM Zoetermeer (NL)**

(72) Inventors:
• **VAN GOUDOEVER, Johannes Bernard
NL-2275 CJ Voorburg (NL)**

• **VAN DER BEEK, Eline Marleen
NL - 3584 CT Utrecht (NL)**
• **ABRAHAMSE-BERKEVELD, Marieke
NL - 3584 CT Utrecht (NL)**

(74) Representative: **Nederlandsch Octrooibureau
P.O. Box 29720
2502 LS The Hague (NL)**

(56) References cited:
**EP-A1- 0 148 680     EP-A2- 0 418 593
WO-A1-2011/119023    AU-A4- 2011 100 142
US-A- 5 916 621      US-A1- 2002 106 436
US-A1- 2008 032 002**

Printed by Jouve, 75001 PARIS (FR)

**Description**

**FIELD**

The present invention relates to infant formulas and follow-on formulas containing optimised amino acid profiles. The formulas may contain intact proteins, hydrolysed proteins, protein fractions, free amino acids and/or a combination thereof selected based on their ability to provide the formula with an optimised amino acid profile. The present invention also relates to the administration of these formulas to infants in order to achieve balanced growth and/or development.

**BACKGROUND**

Amino acids are essential building blocks of proteins in the human body. Some amino acids are classified as essential, meaning that the human body cannot synthesise the amino acid so it must be sourced from the diet. The essential amino acids for humans are valine, isoleucine, leucine, lysine, methionine, threonine, phenylalanine, histidine, and tryptophan. Cysteine and tyrosine are considered to be conditionally essential amino acids, because of their strong link to methionine and phenylalanine respectively. The remaining amino acids (alanine, arginine, asparagine, aspartic acid, glutamic acid, glutamine, glycine, proline, and serine) are non-essential amino acids and can either be synthesised or sourced from the diet.

Infant formulas typically contain a higher level of total protein compared to human breast milk. This is despite the generally accepted hypothesis that too much protein leads to differences in postprandial metabolic kinetics and ultimately, differences in growth and development. For instance, some key examples are the differences in early growth and improved body composition of breastfed infants when compared to formula fed infants (Dewey, 1992; Dewey 1998; and Gale, 2012), and the association of high protein levels in early nutrition with an increase in childhood adiposity (Heinig, 1993; and Koletzko, 2009).

The fact that the proteins used in infant formulas do not typically match the protein quality (e.g., amino acid levels or profile) of human breast milk has also been considered a contributing factor to these differences (Günther, 2007), although it has not been investigated to the same extent. WO 2011/119023 A1 discloses low protein infant formulae having an improved balance of the essential branched chain amino acids leucine, isoleucine and valine.

**SUMMARY**

In work leading up to the present invention the present inventors researched amino acid uptake and protein synthesis by infants and discovered that an infant's requirements of essential amino acids do not necessarily appear to be in line with existing expectations, recommendations, individual protein sources, or products. The present invention is thus based on the inventors' discovery that it is amino acid composition of the protein source (or quality) that needs primary consideration when developing infant formulas, while protein level appears to be a required, but secondary consideration.

The inventors then used the results of their research to develop optimised amino acid profiles and formulations suitable to achieve these profiles, including formulations comprising intact proteins, hydrolysed proteins, protein fractions, free amino acids and/or combinations thereof. The formulations are proposed to promote balanced growth and/or development (e.g., brain, cognitive function, body, body composition). It is also proposed that such formulations can be produced with altered (e.g., lowered) levels of total protein but with optimal amino acid profiles, thus meeting the needs of infants and therefore promoting balanced growth and/or development in infants while preventing or reducing the risk of obesity in the infant at a later stage of life, and also to prevent or reduce the risk of obesity-related diseases and conditions such as metabolic diseases (e.g., metabolic syndrome, diabetes), and cardiovascular disease.

Thus, according to a first aspect of the present invention, we therefore provide an infant or follow-on formula according to claim 1. The infant or follow-on formula comprises a proteinaceous composition which may comprise intact proteins, hydrolysed proteins, protein fractions, free amino acids and/or a combination thereof.

The proteinaceous composition comprises 3.2-5.0 g threonine per 100 g protein, and the proteinaceous composition comprises 0.7-1.1 g tryptophan per 100 g protein. Optionally, the proteinaceous composition comprises at least 0.6 g, 0.7 g, 0.8 g, 0.9 g, or 1.0 g cysteine per 100 g protein.

The proteinaceous composition comprises a ratio of tryptophan to neutral amino acids (isoleucine, leucine, valine, phenylalanine, tyrosine, and methionine) of from 1:33.4 (0.030) to 1:40.8 (0.025). Suitably, the proteinaceous composition comprises a ratio of tryptophan to neutral amino acids of from 1:34.1 (0.029) to 1:40.1 (0.025), even more suitably, the proteinaceous composition comprises a ratio of from 1:35.1 (0.028) to 1:39.1 (0.026), most suitably the proteinaceous composition comprises a ratio of from 1:36.1 (0.028) to 1:38.1 (0.026). Optionally, the proteinaceous composition comprises at least 0.6 g, 0.7 g, 0.8 g, 0.9 g, or 1.0 g cysteine per 100 g protein.

The proteinaceous composition comprises 5.0-7.8 g isoleucine per 100 g protein, 6.6-10.3 g leucine per 100 g protein, 6.2-9.7 g lysine per 100 g protein, 1.8-2.8 g methionine per 100 g protein, and 5.2-8.1 g valine per 100 g protein. Optionally, the proteinaceous composition comprises at least 0.6 g, 0.7 g, 0.8 g, 0.9 g, or 1.0 cysteine per 100 g protein.

The formula may comprise 45-52 mg threonine per 100 mL formula and/or the formula may comprise 10-12 mg tryptophan per 100 mL formula. Suitably, the formula comprises 45-52 mg threonine per 100 mL formula and 10-12 mg tryptophan per 100 mL formula.

The formula may provide, or may be formulated to provide, threonine in an amount of 68-78 mg / kg body weight / day, and/or the formula may provide, or may be formulated to provide, tryptophan in an amount of 15-17 mg / kg body weight / day. Suitably, the formula provides, or is formulated to provide, threonine in an amount of 68-78 mg / kg body weight / day and tryptophan in an amount of 15-17 mg / kg body weight / day.

Suitably, the formula of the present invention is intended for a term infant. Suitably, the formula of any aspect of the present invention is intended for a human infant. More suitably, the formula of any aspect of the present invention is intended for a human term infant.

Suitably, the proteinaceous composition or formula does not comprise or consist of human breast milk.

The formula of the present invention may further comprise a non-digestible oligosaccharide. Suitably, the non-digestible oligosaccharide may be selected from the group consisting of galacto-oligosaccharides, fructo-oligosaccharides and acidic oligosaccharides.

The formula of the present invention may further comprise a polyunsaturated fatty acid (PUFA). Suitably, the PUFA may be selected from the group consisting of alpha-linolenic acid (ALA), linoleic acid (LA), eicosapentaenoic acid (EPA), docosahexaenoic acid (DHA), arachidonic acid (ARA), and docosapentaenoic acid (DPA).

The formula of the present invention may further comprise a probiotic.

The probiotic may comprise a lactic acid producing bacterium. The probiotic may comprise a *Lactobacillus* species. The probiotic may comprise a *Bifidobacterium* species.

The formula of the present invention may comprise a powder suitable for making a liquid composition after reconstitution with an aqueous solution, such as with water.

The formula of the present invention may comprise a ready-to-use liquid food.

Also, there is disclosed a formula as defined herein for use in promoting, assisting or achieving balanced growth or development in an infant. Also provided is a method for promoting, assisting or achieving body growth or development in an infant, wherein the method comprises administering to the infant a formula as defined herein.

The formula comprises a protein intake level of 0.9 to 1.2 g of protein per 100 mL of infant formula, more suitably 1.0-1.2 g of protein per 100 mL of infant formula; or the formula comprises a protein intake level of 1.4 to 1.8 g of protein per 100 kcal of infant formula, more suitably 1.5-1.8 g of protein per 100 kcal of infant formula.

The proteinaceous composition of formula also comprises 5.0-7.8 g isoleucine per 100 g protein, 6.6-10.3 g leucine per 100 g protein, 6.2-9.7 g lysine per 100 g protein, 1.8-2.8 g methionine per 100 g protein, 3.2-5.0 g threonine per 100 g protein, 0.7-1.1 g tryptophan per 100 g protein, and 5.2-8.1 g valine per 100 g protein. More suitably, the proteinaceous composition of formula comprises 3.2-5.0 g threonine per 100 g protein and/or the proteinaceous composition of formula comprises 0.7-1.1 g tryptophan per 100 g protein. In an even more suitable embodiment, the proteinaceous composition of formula comprises 3.2-5.0 g threonine per 100 g protein and 0.7-1.1 g tryptophan per 100 g protein.

In some suitable embodiments, the formula comprises 70-81 mg isoleucine per 100 mL formula, 93-107 mg leucine per 100 mL formula, 87-100 mg lysine per 100 mL formula, 25-29 mg methionine per 100 mL formula, 45-52 mg threonine per 100 mL formula, 10-12 mg tryptophan per 100 mL formula, and/or 73-84 mg valine per 100 mL formula. More suitably, the formula comprises 45-52 mg threonine per 100 mL formula and/or the formula comprises 10-12 mg tryptophan per 100 mL formula. In an even more suitable embodiment, the formula comprises 45-52 mg threonine per 100 mL formula and 10-12 mg tryptophan per 100 mL formula.

The term "growth or development" refers to growth and development of the growth and development of the body of an infant and/or the infant's body composition, also as discussed further below.

The proteinaceous compositions and formulas of the various aspects of the invention are discussed in more detail further below.

## BRIEF DESCRIPTION OF THE FIGURES

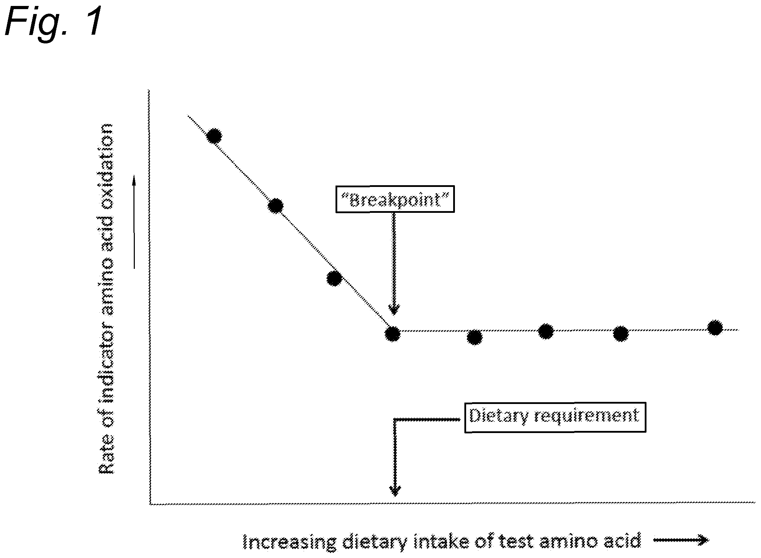

Figure 1 shows an example of a graph plotted by the IAAO method for a test amino acid as described in the introduction for Example 1.

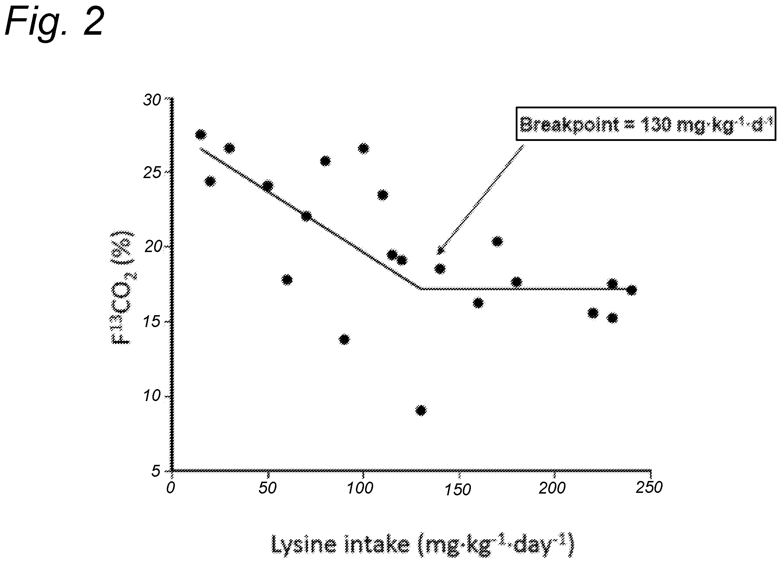

Figure 2 shows the rates of release of $^{13}CO_2$ in the breath of 21 infants ($F^{13}CO_2$) at different lysine intakes as described in Example 1, and in particular Example 1a. Using a biphasic linear regression crossover model, the mean breakpoint was estimated to be 130 mg·kg$^{-1}$·d$^{-1}$ ($P < 0.0001$, r$^2$ = 0.46).

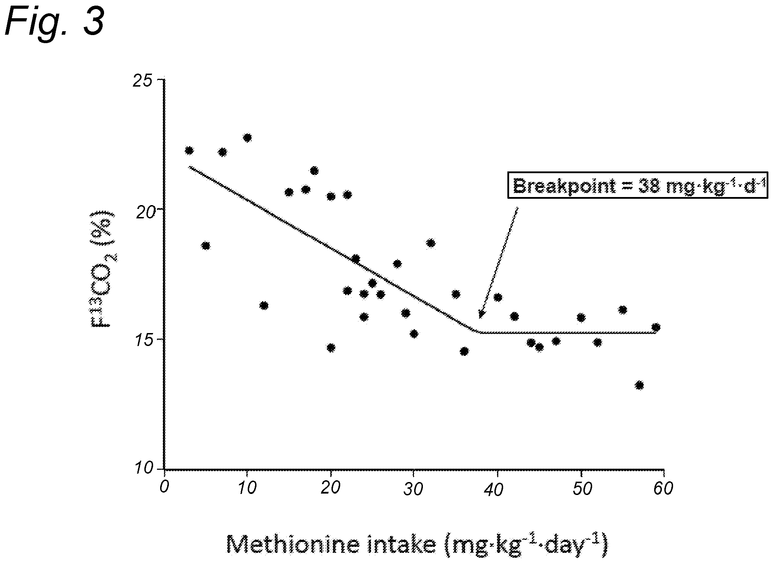

Figure 3 shows the rates of release of $^{13}CO_2$ in the breath of 33 infants (F$^{13}CO_2$) at different methionine intakes as described in Example 1, and in particular Example 1b. Using a biphasic linear regression crossover model, the mean breakpoint was estimated to be 38 mg·kg$^{-1}$·d$^{-1}$ ($P < 0.0001$, r$^2$ = 0.59).

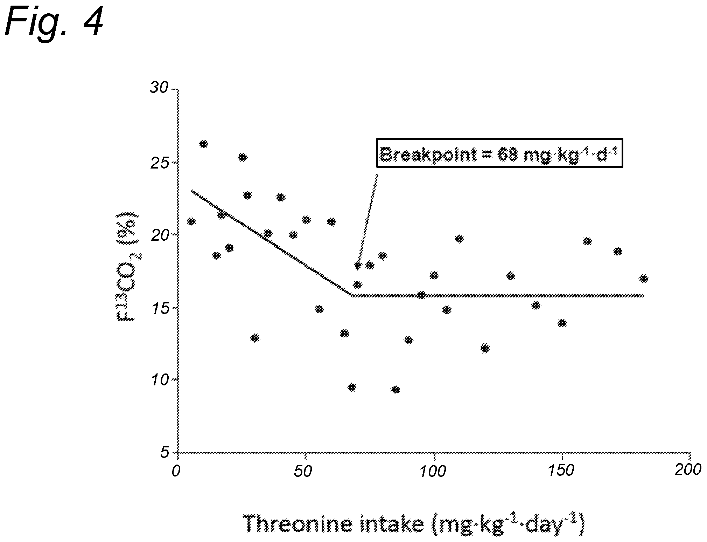

Figure 4 shows the rates of release of $^{13}CO_2$ in the breath of 32 infants (F$^{13}CO_2$) at different threonine intakes as described in Example 1, and in particular Example 1c. Using a biphasic linear regression crossover model, the mean breakpoint was estimated to be 68 mg·kg$^{-1}$·d$^{-1}$ ($P < 0.0001$, r$^2$ = 0.362).

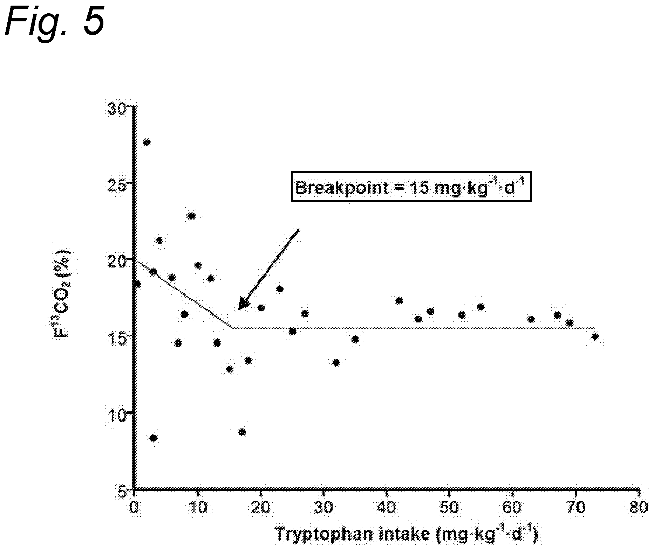

Figure 5 shows the rates of release of $^{13}CO_2$ in the breath of 30 infants (F$^{13}CO_2$) at different tryptophan intakes as described in Example 1, and in particular Example Id. Using a biphasic linear regression crossover model, the mean breakpoint was estimated to be 15 mg·kg$^{-1}$·d$^{-1}$ ($P < 0.05$, r$^2$ = 0.13).

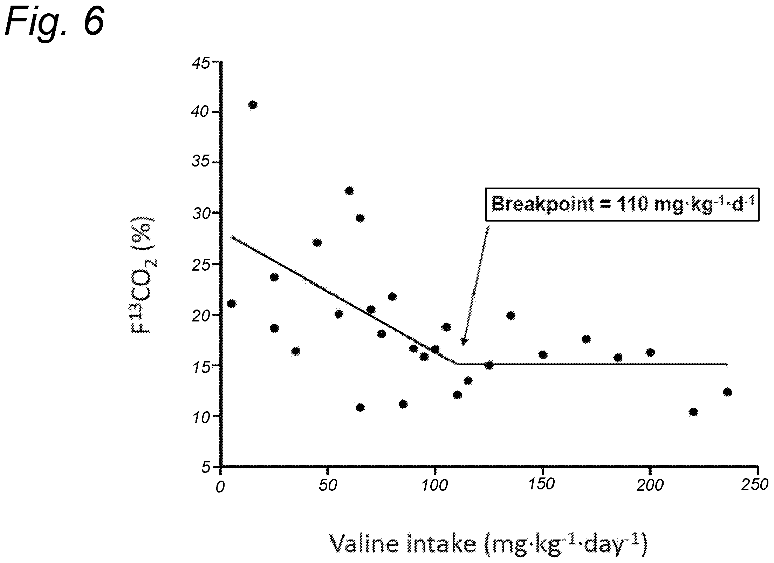

Figure 6 shows the rates of release of $^{13}CO_2$ in the breath of 28 infants (F$^{13}CO_2$) at different valine intakes as described in Example 1, and in particular Example 1e. Using a biphasic linear regression crossover model, the mean breakpoint was estimated to be 110 mg·kg$^{-1}$·d$^{-1}$ ($P = 0.001$, r$^2$ = 0.35).

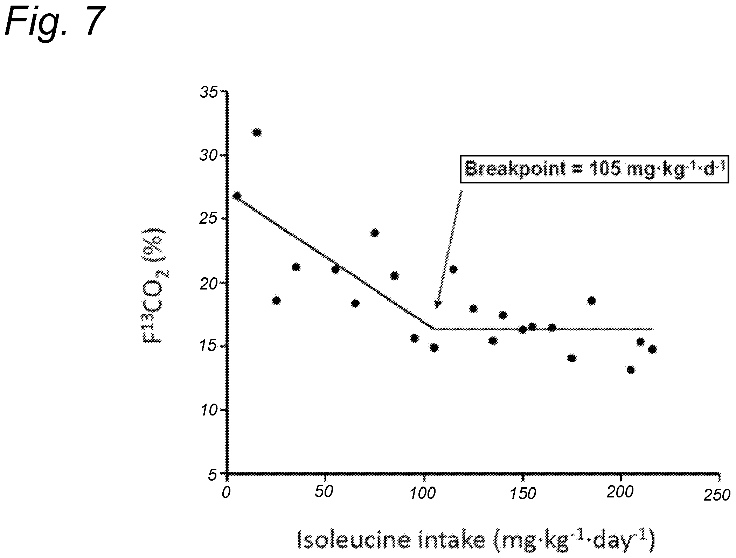

Figure 7 shows the rates of release of $^{13}CO_2$ in the breath of 22 infants (F$^{13}CO_2$) at different isoleucine intakes as described in Example 1, and in particular Example If. Using a biphasic linear regression crossover model, the mean breakpoint was estimated to be 105 mg·kg$^{-1}$·d$^{-1}$ ($P < 0.0001$, r$^2$ = 0.61).

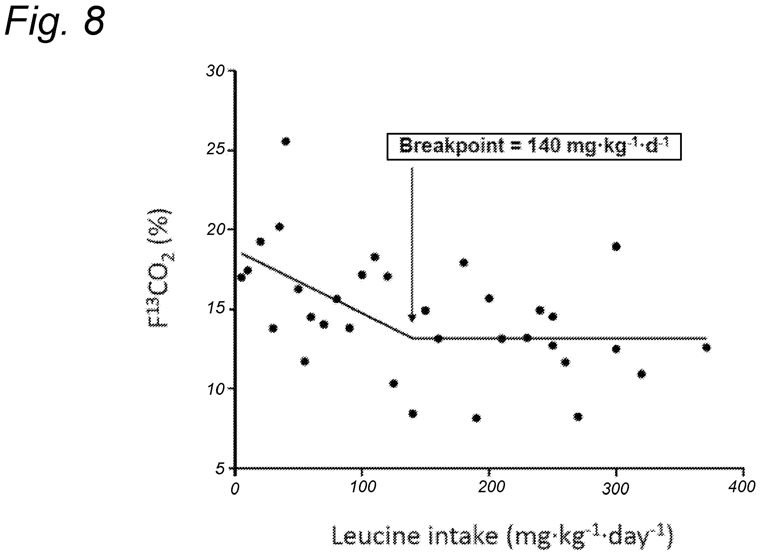

Figure 8 shows the rates of release of $^{13}CO_2$ in the breath of 33 infants (F$^{13}CO_2$) at different leucine as described in Example 1, and in particular Example 1g. Using a biphasic linear regression crossover model, the mean breakpoint was estimated to be 140 mg·kg$^{-1}$·d$^{-1}$ ($P = 0.002$, r$^2$ = 0.26).

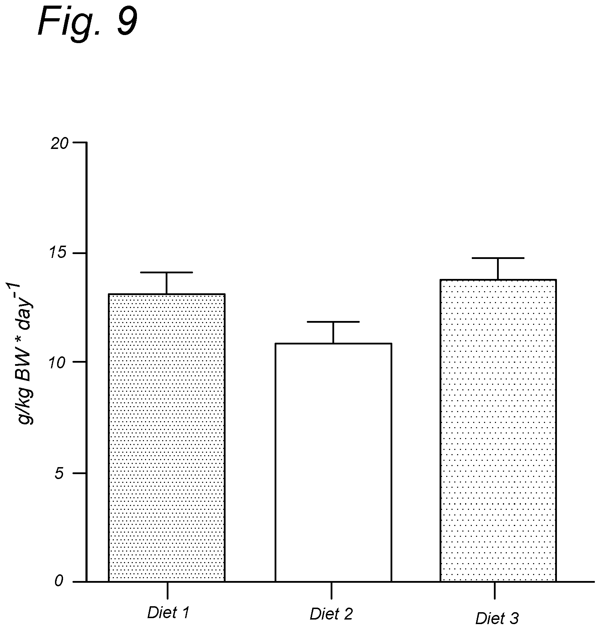

Figure 9 shows the weight gain results of the piglet study described in Example 6, where piglets were fed one of three diets: diet 1 was a control infant formula with normal levels of protein and a non-adjusted amino acid composition for infants (n=26); diet 2 was a control formula with 20% less total protein without amino acid adjustment (n= 27); and diet 3 was a formula with an optimised amino acid composition based on the results described in the earlier examples, and with 20% lower total protein compared to the protein level of diet 1 (n=26). The growth rate for the piglets over the 17 day study period is shown in Figure 9, where it can be seen that the piglets fed diets 1 and 3 were comparable to each other, while the growth rate for the piglets fed diet 2 was less.

## DETAILED DESCRIPTION

**Proteinaceous Composition - Amino Acid Profile**

The present invention is based on the inventors' discovery of the requirements of infants for individual essential amino acids by actual measurements of requirement levels in formula-fed infants, and the subsequent determination of those levels in the context of product (e.g., infant formula or follow-on formula) development, as well as the development of optimised amino acid profiles (*i.e.,* the combinations of the required levels of individual essential amino acids) and formulations suitable to achieve these profiles, including formulations comprising intact proteins, hydrolysed proteins, protein fractions, free amino acids and/or combinations thereof.

Interestingly, it is noted that the requirements of some essential amino acids deviate from the levels reported in human breast milk, or used in commercially available infant formulas. Thus, the inventors surprisingly discovered that the levels of essential amino acids required for protein synthesis (and therefore for growth and development) in term infants are met at formula intake levels where the intake levels differs distinctly from that found in human breast milk and in commercially available formulas for specific essential amino acids, where the combined profile of two or more of those intake levels differs distinctly from that found in human breast milk and in commercially available formulas for specific essential amino acids, and where the ratios between several amino acids differs distinctly from those found in human breast milk and in commercially available formulas.

For instance, the individual breakpoints for the essential amino acids that act as precursors for neurotransmitters in the brain, such as tryptophan and threonine, are lower than the levels found in human breast milk and/or commercially available formulas. Furthermore, the ratio between tryptophan and the neutral amino acids (valine, leucine, isoleucine, phenylalanine, tyrosine, and methionine) may affect the bioavailability of tryptophan, a precursor for the production of serotonin in the brain, and was calculated to be different to that found in human breast milk and/or commercially available formulas. Details of these discoveries and their relevance are discussed in more detail below.

Furthermore, using the new levels of amino acids in compositions may allow for compositions that promote balanced growth and/or development, as further described herein. It may also allow for effective lowering of protein levels in infant formula, also as further described herein.

*Threonine*

Commercial formulas typically provide threonine ranging from 105-125 mg·kg$^{-1}$·d$^{-1}$ when given 150 mL·kg$^{-1}$·d$^{-1}$

(Viadel, 2000). By contrast, the present inventors established the threonine requirement of infants to be 68 mg·kg$^{-1}$·d$^{-1}$, and this was subsequently determined to be 45-52 mg / 100 mL (formula) and 3.2-5.0 g / 100 g (protein). This suggests that the threonine levels required by infants are considerably (and unexpectedly) lower than those in existing commercial formulas.

Hyperthreoninemia has been associated with seizures and growth retardation (Reddi, 1978) and other undesirable conditions including congenital amaurosis (Hayasaka, 1986). Commercial dairy-based formulas therefore typically use acid whey to reduce the risk of hyperthreoninemia (Rigo, 2001). Nevertheless, as the threonine requirements determined in the present invention appear to be even lower than the levels of current formulas that are expected to be safe, there may still be a risk that infants receive through existing commercial formulas more threonine than they require. In addition, infants fed with formula are reported to have a lower capacity to oxidise threonine compared to breastfed infants (Darling, 1999). Moreover, the use of acid whey (to reduce threonine levels in infant formulas) will also result in higher tryptophan levels, which are considered, in contrast to current beliefs, undesirable (see below).

An excessive dietary content of threonine (*i.e.,* higher levels than breast milk and existing commercial formulas) has been shown to elevate threonine levels and glycine levels in various tissues, including the brain (Castagné, 1993; and Boehm, 1998). This increase of glycine levels in the brain is believed to affect the neurotransmitter balance in the brain, which may have consequences for brain development (Boehm, 1998).

Accordingly, the present invention contemplates proteinaceous compositions and infant formulas comprising threonine levels that meet the requirements of an infant, but do not demonstrably exceed these requirements. It is believed that such proteinaceous compositions and formulas can promote balanced brain development in the infant.

*Tryptophan*

Commercial formulas typically provide tryptophan ranging from 24-32 mg·kg$^{-1}$·d$^{-1}$ when given 150 mL·kg$^{-1}$·d$^{-1}$ (Viadel, 2000). By contrast, the present inventors established the tryptophan requirement of infants to be 15 mg·kg$^{-1}$·d$^{-1}$, and this was subsequently determined to be 10-12 mg / 100 mL (formula) and 0.7-1.1 g / 100 g (protein). This suggests that the tryptophan levels required by infants are considerably (and unexpectedly) lower than those in existing commercial formulas.

This finding is also in contrast to the literature which generally teaches that infant formulas with increased levels of tryptophan are beneficial for infants (Trabulsi, 2011; and Sandström, 2008). In fact, increased levels of tryptophan were believed to be desirously achieved when using acid whey in infant formulas. The whey protein alpha-lactalbumin is known to contain high levels of tryptophan. Accordingly, in suitable embodiments of the present invention the proteinaceous composition or infant formula does not comprise only (e.g., consist of) acid whey. More suitably, the proteinaceous composition or infant formula does not comprise acid whey. In some embodiments of the present invention the proteinaceous composition or infant formula does not comprise only (*e.g.*, consist of) alpha-lactalbumin. More suitably, the proteinaceous composition or infant formula does not comprise alpha-lactalbumin.

Tryptophan is required for the formation of serotonin. Serotonin, being a neurotransmitter, plays an important role in the brain and helps to relay messages from one part of the brain to another. Most brain cells are directly or indirectly associated with serotonin, including cells that relate to mood, appetite, sleep, memory, learning, and some social behaviours. Dietary tryptophan intake has been shown to modulate sleep pattern in infants.

Considering the role of tryptophan in the serotonin pathway, the present inventors' findings with regards to tryptophan levels may indicate that an infant's body does not require significant levels of tryptophan for growth and therefore any excess may lead to higher levels of serotonin in the brain. High serotonin levels are undesirable as this may detrimentally affect cortex development (Riccio, 2011) thereby increasing the risk for psychiatric disease in later life. High serotonin levels have been associated with a risk of affective disorders, depression and schizophrenia. High long term dietary intake of tryptophan has also been associated with insulin sensitivity in animal studies (Koopmans, 2009).

*Ratio of tryptophan to neutral amino acids*

It has been stated that the altered ratio of tryptophan to neutral amino acids (valine, leucine, isoleucine, phenylalanine, tyrosine, and methionine) in infant formulas might have possible implications on brain development, because the neutral amino acids compete with the uptake of tryptophan through the blood brain barrier, also referred to as transporter competition (Dörner, 1983; and Heine, 1999), and there may also be effects on obesity given the role of tryptophan and its metabolites in appetite and food intake regulation (Dörner, 1983). This forms the rationale for many publications and infant formulas that focus on lowering protein levels (to avoid unnecessary metabolic load), while providing the right amount of tryptophan to the infant, mainly achieved by enrichment of whey-fractions such as alpha-lactalbumin (Heine, 1996; and Lien, 2003).

The insulin response to a carbohydrate containing meal in adults will induce a transfer of large neutral amino acids into muscle tissue, which as a result produces a relatively high plasma tryptophan : large neutral amino acid ratio, enhancing the transfer of tryptophan into the brain (Lien, 2003). Infants, however, have a higher level of glucagon and epinephrine, which limits the insulin-induced flow of large neutral amino acids into muscle tissue. Combined with lower muscle mass, and a relatively high protein intake per kilogram of bodyweight, it has been stated that infants rely more heavily on the dietary balance of tryptophan : large neutral amino acids to maintain adequate brain tryptophan uptake (Lien, 2003).

The ratio of tryptophan to neutral amino acids is on average 1:18.2 (0.055) for human milk (WHO/FAO/UNU, 2007), which is the reference value for most commercial products currently on the market. The findings in the present invention clearly deviate from this hypothesis. In the present invention, the ratio of tryptophan to neutral amino acids was found to be much lower ranging from 1:33.4 (0.030) to 1:40.8 (0.025), depending on tyrosine levels. Accordingly, it appears that if an infant formula were to be developed to meet the higher ratios based on the earlier publications and the value for human milk, there may be a risk that the formula would contain too much tryptophan.

While the ratio found in the present invention might seem to be against the teachings in the art, it is believed to be valid and in particular it is noted that the tryptophan breakpoint obtained in the present experiments employed an excess of all other amino acids (including neutral amino acids), so the breakpoint results were obtained in a state of transporter competition.

Furthermore, the present invention is based on actual measurements of infants' needs. This means that the large neutral amino acids taken up by the body will be transferred and almost all of it incorporated into the muscle tissue, and that there will not be an excess of those amino acids. Without wishing to be bound by theory, it is hypothesised that this results in a beneficial tryptophan : large neutral amino acid ratio in the plasma, which enables a lowering of the amount of tryptophan (as compared to human milk and commercially available formulas).

Accordingly, it is believed that it may be beneficial to consider the level of tryptophan in formulas in the context of optimal balanced levels of neutral amino acids. It also appears that the tryptophan results of the present invention may support a lowering of the levels of the neutral amino acids, which is reflected in the amino acid profile determined herein when compared with the profiles found in human breast milk or in commercially available formulas.

## PROTEINACEOUS COMPOSITIONS AND INFANT FORMULAS

Thus, the present invention provides an infant or follow-on formula comprising a proteinaceous composition according to the claim 1. The proteinaceous composition may comprise intact proteins, hydrolysed proteins, protein fractions, free amino acids and/or a combination thereof.

The proteinaceous composition comprises the following amino acids for every 100 grams of protein in the proteinaceous composition:

- threonine in an amount from 3.2-5.0 g, suitably in an amount from 3.2-4.5 g, more suitably in an amount from 3.5-4.0 g; and
- tryptophan in an amount from 0.7-1.1 g, suitably in an amount from 0.7-1.0 g, more suitably in an amount from 0.8-0.9 g.

Optionally, the proteinaceous composition comprises at least 0.6 g, 0.7 g, 0.8 g, 0.9 g, or 1.0 g cysteine per 100 g protein.

Suitably, the proteinaceous composition comprises threonine in an amount from 3.2-4.5 g / 100 g protein, most suitably in an amount from 3.5-4.0 g / 100 g protein.

Suitably, the proteinaceous composition comprises tryptophan in an amount from 0.7-1.0 g / 100 g protein, most suitably in an amount from 0.8-0.9 g / 100 g protein.

In some exemplary embodiments, the proteinaceous composition comprises 3.2-4.5 g threonine per 100 g protein, more suitably 3.5-4.0 g threonine per 100 g protein, and the proteinaceous composition further comprises 0.7-1.1 g tryptophan per 100 g protein, suitably 0.7-1.0 g per 100 g protein, more suitably 0.8-0.9 g per 100 g protein.

The proteinaceous composition comprises a ratio of tryptophan to neutral amino acids (isoleucine, leucine, valine, phenylalanine, tyrosine, and methionine) of from 1:33.4 (0.030) to 1:40.8 (0.025). Suitably, the proteinaceous composition comprises a ratio of tryptophan to neutral amino acids of from 1:34.1 (0.029) to 1:40.1 (0.025), even more suitably, the proteinaceous composition comprises a ratio of from 1:35.1 (0.028) to 1:39.1 (0.026), most suitably the proteinaceous composition comprises a ratio of from 1:36.1 (0.028) to 1:38.1 (0.026). Optionally, the proteinaceous composition comprises at least 0.6 g, 0.7 g, 0.8 g, 0.9 g, or 1.0 g cysteine per 100 g protein.

The proteinaceous composition comprises all of the following amino acids for every 100 gram of protein:

- isoleucine in an amount from 5.0-7.8 g, suitably in an amount from 5.0-7.0 g, more suitably in an amount from 5.5-6.3 g;
- leucine in an amount from 6.6-10.3 g, suitably in an amount from 6.6-9.3 g, more suitably in an amount from 7.3-8.4 g;
- lysine in an amount from 6.2-9.7 g, suitably in an amount from 6.2-8.7 g, more suitably in an amount from 6.8-7.8 g;

- methionine in an amount from 1.8-2.8 g, suitably in an amount from 1.8-2.5 g, more suitably in an amount from 2.0-2.3 g; and/or
- valine in an amount from 5.2-8.1 g, suitably in an amount from 5.2-7.3 g, more suitably in an amount from 5.7-6.6 g.

Optionally, the proteinaceous composition comprises at least 0.6 g, 0.7 g, 0.8 g, 0.9 g, or 1.0 g cysteine per 100 g protein.

According to the present invention, the formula comprising a proteinaceous composition as defined here above.

The formula may comprise one or more of the following amino acids for every 100 mL of formula:

- threonine in an amount from 45-52 mg, suitably in an amount from 45-50 mg, more suitably in an amount from 45-47 mg; and/or
- tryptophan in an amount from 10-12 mg, suitably in an amount from 10-11 mg, more suitably in an amount of 10 mg.

Suitably, the formula comprises threonine in an amount from 45-52 mg / 100 mL formula, more suitably in an amount from 45-50 mg / 100 mL formula, most suitably in an amount from 45-47 mg / 100 mL formula.

Suitably, the formula comprises tryptophan in an amount from 10-12 mg / 100 mL formula, more suitably in an amount from 10-11 mg / 100 mL formula, most suitably in an amount of 10 mg / 100 mL formula.

In some exemplary embodiments, the formula comprises 45-52 mg threonine per 100 mL formula, suitably 45-50 mg threonine per 100 mL formula, more suitably 45-47 mg threonine per 100 mL formula, and the formula further comprises 10-12 mg tryptophan per 100 mL formula, suitably 10-11 mg per 100 mL formula, more suitably 10 mg per 100 mL formula.

In some suitable embodiments (b), the formula comprises one or more, suitably at least two, more suitably at least three, even more suitably at least four, most suitably all of the following amino acids for every 100 millilitres of formula:

- isoleucine in an amount from 70-81 mg, suitably in an amount from 70-77 mg, more suitably in an amount from 70-74 mg;
- leucine in an amount from 93-107 mg, suitably in an amount from 93-102 mg, more suitably in an amount from 93-98 mg;
- lysine in an amount from 87-100 mg, suitably in an amount from 87-96 mg, more suitably in an amount from 87-91 mg;
- methionine in an amount from 25-29 mg, suitably in an amount from 25-28 mg, more suitably in an amount from 25-26 mg; and/or
- valine in an amount from 73-84 mg, suitably in an amount from 73-80 mg, more suitably in an amount from 73-77 mg.

In an exemplary embodiment, the formula complies with both (a) and (b).

The formula may provide or is formulated to provide one or more of the following amino acids for every kilogram of body weight of the infant each day:

- threonine in an amount from 68-78 mg, suitably in an amount from 68-75 mg; and/or
- tryptophan in an amount from 15-17 mg, suitably in an amount from 15-16 mg.

Suitably, the formula provides or is formulated to provide threonine for every kilogram of body weight of the infant each day in an amount from 68-78 mg, more suitably in an amount from 68-75 mg.

Suitably, the formula provides or is formulated to provide tryptophan for every kilogram of body weight of the infant each day in an amount from 15-17 mg, more suitably in an amount from 15-16 mg.

In some exemplary embodiments, the formula provides or is formulated to provide threonine for every kilogram of body weight of the infant each day in an amount from 68-78 mg, suitably in an amount from 68-75 mg, and the formula provides or is formulated to provide tryptophan for every kilogram of body weight of the infant each day in an amount from 15-17 mg, suitably in an amount from 15-16 mg.

In some suitable embodiments, the formula provides or is formulated to further provide one or more, suitably at least two, more suitably at least three, even more suitably at least four, most suitably all of the following amino acids for every kilogram of body weight of the infant each day:

- isoleucine in an amount from 105-121 mg, suitably in an amount from 105-116 mg;
- leucine in an amount from 140-161 mg, suitably in an amount from 140-154 mg;
- lysine in an amount from 130-150 mg, suitably in an amount from 130-143 mg;
- methionine in an amount from 38-44 mg, suitably in an amount from 38-42 mg; and/or
- valine in an amount from 110-127 mg, suitably in an amount from 110-121 mg.

Suitably, the formula of any aspect of the present invention is intended for a term infant. Suitably, the formula of any aspect of the present invention is intended for a human infant. More suitably, the formula of any aspect of the present invention is intended for a human term infant.

Suitably, the proteinaceous composition or formula of any aspect of the present invention does not comprise or consist of human breast milk.

Suitable proteinaceous compositions and formulas are further described herein.

## PROTEINACEOUS COMPOSITION - SOURCES

The proteinaceous compositions of the present invention may comprise an intact protein, a hydrolysed protein, a protein fraction, a free amino acid and/or a combination thereof, such that the proteinaceous composition comprises the amino acid profile of any aspect of the present invention.

The term "an intact protein" as used herein refers to any form of intact protein, including but not limited to a protein concentrate and/or a protein isolate, as well as other forms of intact proteins.

The term "hydrolysed protein" as used herein refers to partially and/or extensively hydrolysed proteins. Suitably the proteinaceous composition of the present invention comprises a hydrolysed protein with a degree of hydrolysis of between 5% and 25%, more suitably between 7.5% and 21%, most suitably between 10% and 20%. The degree of hydrolysis is defined as the percentage of peptide bonds which have been broken by enzymatic hydrolysis, with 100% being the total potential peptide bonds present. A suitable method for preparing a protein hydrolysate is described in WO 2001/041581, the entire contents of which is incorporated herein by reference. The use of these proteins may reduce the allergic reactions of an infant.

The proteinaceous composition may comprise any suitable intact protein, hydrolysed protein, protein fraction, free amino acid and/or a combination thereof, which is selected such that the requirements for the amino acid profile of the proteinaceous composition as defined herein are met. For instance, as discussed elsewhere, the present inventors have demonstrated the desirability of lowering the levels of tryptophan and threonine relative to those found in human breast milk and/or commercially available formulas, and/or to provide a ratio between tryptophan and the neutral amino acids that is different to that found in human breast milk and/or commercially available formulas. Other considerations known to those skilled in the art should be taken into account in selecting a suitable proteinaceous composition. For instance, some protein sources exhibit a high level of variation between batches of the protein, which may be due to genetic background of the source of the protein and also seasonal variation. Furthermore, a proteinaceous composition produced by fermentation with some microorganisms may be not suitable if the fermenting microorganisms are still present in the composition and are deemed undesirable for the purpose of the composition. Such selection considerations will be well known to those skilled in the art.

In some embodiments, the proteinaceous composition comprises an intact protein, and a free amino acid. In some embodiments, the proteinaceous composition comprises a hydrolysed protein and/or a protein fraction, and a free amino acid. In some embodiments, the proteinaceous composition comprises free amino acids. In some embodiments, the proteinaceous composition consists essentially of or consists of free amino acids.

The proteinaceous composition may comprise a non-human animal protein (such as milk proteins, including caseins and whey proteins, meat proteins and egg proteins), a non-animal protein, a dairy protein, a non-cow dairy protein, a non-dairy protein, a vegetable protein, an algal protein, a hydrolysate of any of these proteins, a fraction of any of these proteins, a free amino acid, and/or a combination of any of these amino acid sources.

In some embodiments, the proteinaceous composition comprises an animal protein and a non-animal protein, and optionally a free amino acid. The animal protein and/or the non-animal protein may comprise an intact protein, a protein hydrolysate, or a protein fraction. Suitably, the proteinaceous composition comprises a dairy protein and a non-animal protein, and optionally a free amino acid. The proteinaceous composition may comprise a dairy protein and a vegetable protein, and optionally a free amino acid. The dairy protein and/or the vegetable protein may comprise an intact protein, a protein hydrolysate, or a protein fraction. The proteinaceous composition may comprise a dairy protein and an algal protein, and optionally a free amino acid. The dairy protein and/or the algal protein may comprise an intact protein, a protein hydrolysate, or a protein fraction. The proteinaceous composition may comprise a non-cow dairy protein and a vegetable protein, and optionally a free amino acid. The non-cow dairy protein and/or the vegetable protein may comprise an intact protein, a protein hydrolysate, or a protein fraction. The proteinaceous composition may comprise a non-cow dairy protein and an algal protein, and optionally a free amino acid. The non-cow dairy protein and/or the algal protein may comprise an intact protein, a protein hydrolysate, or a protein fraction.

In some embodiments, the proteinaceous composition does not comprise an animal-milk-derived (*e.g.,* dairy) protein. More suitably, the proteinaceous composition does not comprise a cow-derived protein (*e.g.*, cow's milk protein) and/or does not comprise a goat-derived protein (*e.g.*, goat's milk protein). In some embodiments, the proteinaceous composition does not comprise only (*e.g.*, consist of) acid whey. More suitably, the proteinaceous composition does not comprise acid whey. In some embodiments, the proteinaceous composition does not comprise only (*e.g.*, consist of) alpha-lactalbumin. More suitably, the proteinaceous composition does not comprise alpha-lactalbumin.

In some embodiments, the proteinaceous composition does not comprise a soy protein.

Suitably, the proteinaceous composition comprises at least 40%, 50%, 60%, 70%, 80%, 90%, or 95% (or any integer inbetween) of amino acid sources comprising an intact protein, a hydrolysed protein, a protein fraction, such that the proteinaceous composition comprises less than 5%, 10%, 20%, 30%, 40%, 50%, or 60% (or any integer inbetween) of a free amino acid. Most suitably, the proteinaceous composition comprises at least 60% of amino acid sources comprising an intact protein, a hydrolysed protein, a protein fraction, such that the proteinaceous composition comprises 40% or less of a free amino acid.

Reference throughout this document (both specification and claims) is made to weight units (milligrams or grams) of amino acids. Where expressed per weight unit of protein (*e.g.,* per 100 g protein), it should be noted that this expression refers to the relative weight of the amino acid(s) in terms of the protein weight, where the protein weight means the weight of all proteinaceous matter.

Furthermore, where reference throughout this document (both specification and claims) is made to weight units (milligrams or grams) of amino acids, it should be noted that these units are protein equivalent weights of amino acids (*i.e.*, the weight of amino acid when present in a protein). Thus, where a free amino acid is employed in the present invention, the dehydration synthesis reactions which occur when a protein is formed from free amino acids must be taken into account. Accordingly, if a free amino acid is employed in the present invention, the weight of the free amino acid that is required is 17% higher than the protein equivalent weight (as expressed herein). To illustrate, if a proteinaceous composition of the present invention as referred to herein requires 15 mg of tryptophan, this refers to 15 mg of tryptophan when present in a protein, and will be met with 17.55 mg of tryptophan in free amino acid form. Such calculations and conversions are well known to those skilled in the art.

Suitable amino acid sources for the proteinaceous composition include, but are not limited to, cow's milk protein, whey (including acid whey, sweet whey, and alpha-lactalbumin enriched whey), alpha-lactalbumin, beta-lactoglobulin, glycomacropeptide, casein (including beta-casein), skim milk, lactoferrin, colostrum, goat's milk protein, fish (including cod fish hydrolysate and Neptune krill), chicken protein, pork protein, soy protein (including soy protein isolate), pea protein (including pea protein isolate), wheat protein, rice protein, rice bran, potato protein (including potato protein isolate), lupin (including lupin protein from mature seeds, and sweet lupin concentrate), cotton (including cotton seed hydrolysate), canola, sesame, corn, oats, beans (including kidney bean), ferredoxin (derived from various plant sources), green plant sources (including RuBisCO), fractions of any of these proteins, hydrolysates of any of these proteins, and free amino acids (including amino acids isolated from an amino acid source and/or amino acids that have been chemically or synthetically produced).

The amino acid sources may be commercially available sources (*e.g.*, Soy ProtYield).

The amino acid profile of the proteinaceous compositions of the present invention, as described herein, refers to one or more essential amino acids (or conditionally essential amino acids in some instances). It will be recognised by those skilled in the art that the proteinaceous composition will also comprise non-essential amino acids. Suitably, the proteinaceous composition or formula of the present invention comprises a ratio of essential amino acids : non-essential amino acids of 40-60 : 40-60, suitably 45-55 : 45-55, even more suitably 48-52 : 48-52. This is in line with the typical ratio of essential amino acids in human breast milk and commercially available formulas, thus it is noted that the in these suitable embodiments, and in particular where the lowering of specific essential amino acids (e.g., threonine and tryptophan) has been shown to be desirable, the present invention does not contemplate a lowering of the essential amino acids relative to the non-essential amino acids.

**FORMULA**

The formula of the present invention may comprise an infant formula or a follow-on formula. An infant formula is typically intended for infants from the age of 0 to 6 months, although it can also be used to describe an infant formula intended for infants from the age of 0 to 12 months. A follow-on formula is typically intended for infants aged 6 to 12 months. Accordingly, the term "formula" and "infant formula" as used herein refers to a formula intended for an infant aged 0 to 12 months, more suitably 0 to 6 months. Suitably, the infant is a human infant. Suitably, the formula does not comprise or consist of human breast milk.

The formula of the present invention may comprise an enteral composition, *i.e.*, any composition that is enterally administered, such as orally. As used in this document, the term "enteral" is intended to refer to the delivery directly into the gastrointestinal tract of a subject (*e.g.*, orally or via a tube, catheter or stoma).

The formula may be formulated for administration in a liquid form. In some embodiments, the formula may comprise a powder suitable for making a liquid composition after reconstitution with an aqueous solution, such as with water. The formula may be made up as a packaged powder composition wherein the package is provided with instructions to admix the powder with a suitable amount of aqueous solution, thereby resulting in a liquid composition. In some other embodiments, the formula may comprise a ready-to-use liquid food (*e.g.,* is in a ready-to-feed liquid form). A packed ready-to-use liquid food may involve fewer steps for preparation than a powder to be reconstituted and hence may involve a reduced chance on contamination by harmful micro-organisms.

The formula may be intended as a complete nutrition for infants. Suitably, the infant is a human infant. Suitably, the formula of any aspect of the present invention is intended for a term infant. More suitably, the formula of any aspect of the present invention is intended for a human term infant. A "human term infant" is a human infant born at 37-42 weeks of gestation.

The formula may further comprise a lipid, a carbohydrate, a vitamin and/or a mineral. In some embodiments, the formula may comprise between 5 and 50 en% lipid, between 5 and 50 en% protein, between 15 and 90 en% carbohydrate. Suitably, the formula may comprise between 35 and 50 en% lipid, between 7.5 and 12.5 en% protein and between 35 and 80 en% carbohydrate (en% is short for energy percentage and represents the relative amount each constituent contributes to the total caloric value of the preparation).

The formula comprises a low level of protein, wherein a "low level" refers to a protein intake level of 0.9 to 1.2 g of protein per 100 mL of infant formula. A protein intake level of 0.9 to 1.4 g of protein per 100 mL of infant formula correlates to 1.4 to 2.1 g of protein per 100 kcal of infant formula, based on an energy level of 66 kcal per 100 mL. The formula may therefore comprise 0.9 to 1.2 g of protein per 100 mL of infant formula, suitably 1.0-1.2 g of protein per 100 mL of infant formula. The formula may comprise 1.4 to 1.8 g of protein per 100 kcal of infant formula, suitably 1.5-1.8 g of protein per 100 kcal of infant formula.

The formula may further comprise a non-digestible oligosaccharide. Suitably, the non-digestible oligosaccharide may be selected from the group consisting of galacto-oligosaccharides, fructo-oligosaccharides and acidic oligosaccharides. Such oligosaccharides are well known to those skilled in the art.

The formula may further comprise a polyunsaturated fatty acid (PUFA). Suitably, the PUFA may be selected from the group consisting of alpha-linolenic acid (ALA), linoleic acid (LA), eicosapentaenoic acid (EPA), docosahexaenoic acid (DHA), arachidonic acid (ARA), and docosapentaenoic acid (DPA). Suitably, the PUFA may be a long chain polyunsaturated fatty acid (LCPUFA) (*e.g.*, EPA, DHA, ARA, DPA). Such PUFAs are well known to those skilled in the art.

The formula may further comprise a probiotic. Suitable probiotics are well known to those skilled in the art. The probiotic may comprise a lactic acid producing bacterium. The probiotic may comprise a *Lactobacillus* species. The probiotic may comprise a *Lactobacillus rhamnosus* strain (including *L. rhamnosus* GG, also referred to as "LGG"), a *Lactobacillus salivarius* strain, a *Lactobacillus casei* strain, a *Lactobacillus paracasei* strain (including *L. paracasei* F19), a *Lactobacillus acidophilus* strain, a *Lactobacillus reuteri* strain, and/or a *Lactobacillus helveticus* strain. The probiotic may comprise a *Bifidobacterium* species. The probiotic may comprise a *Bifidobacterium longum* strain, a *Bifidobacterium infantis* strain, a *Bifidobacterium breve* strain (including *B. breve* M-16V and *B. breve* BbC50), a *Bifidobacterium animalis* strain (including *B. animalis* subsp. *lactis,* including subsp. *lactis* BB-12 and subsp. *lactis* Bi-07), and/or a *Bifidobacterium bifidum* strain. In some embodiments, the probiotic may be viable or non-viable. As used herein, the term "viable", refers to live microorganisms. The term "non-viable" or "non-viable probiotic" means non-living probiotic microorganisms, their cellular components and metabolites thereof. Such non-viable probiotics may have been heat-killed or otherwise inactivated but retain the ability to favourably influence the health of the host. The probiotics may be naturally-occurring, synthetic or developed through the genetic manipulation of organisms, whether such new source is now known or later developed. Suitably, the formula does not comprise *Saccharomyces cerevisiae.*

The formula may comprise a fermented or a non-fermented composition. Fermentation by micro-organisms results in a lowering of the pH. As a non-fermented composition, the formula may have a pH above 5.5, such as 6.0, such as 6.5 (for example, in order to reduce damage to teeth). The pH may suitably be between 6 and 8.

The formula may be formulated to reduce stool irregularities (*e.g.*, hard stools, insufficient stool volume, diarrhoea), which is a major problem in many babies. The formula may be administered in the form of a liquid formula which has an osmolality between 50 and 500 mθsm/kg, such as between 100 and 400 mθsm/kg.

The formula may be administered in the form of a liquid formula with a viscosity between 1 and 60 mPa.s, such as between 1 and 20 mPa.s, such as between 1 and 10 mPa.s, such as between 1 and 6 mPa.s. The low viscosity ensures a proper administration of the liquid, *e.g.,* a proper passage through the hole of a nipple in a nursing bottle. Also, this viscosity closely resembles the viscosity of human milk. Furthermore, a low viscosity results in a normal gastric emptying and a better energy intake, which is essential for infants that need the energy for optimal growth and development. The viscosity of the liquid may be determined using a Physica Rheometer MCR 300 (Physica Messtechnik GmbH, Ostfilden, Germany) at shear rate of 95 s$^{-1}$ at 20 °C.

The formula may be formulated so that it does not have an excessive caloric density. Hence, the formula (in liquid form) may have a caloric density between 0.1 and 2.5 kcal/mL, such as a caloric density of between 0.4 and 1.2 kcal/mL, such as between 0.55 and 0.75 kcal/mL.

The formula may have a long shelf life. For example, it may be shelf stable at ambient temperature for at least 6 months, such as least 12 months, where it is in a liquid, ready-to-feed form or where it is in a powder form.

## BALANCED GROWTH AND/OR DEVELOPMENT

As described herein, the present inventors have developed optimised amino acid profiles and formulations suitable to achieve these profiles. The formulations are proposed to promote balanced growth and/or development in an infant.

The term "balanced" as used in the phrase "balanced growth and/or development" is intended to refer to healthy or normal growth and/or development of an infant. For example, the growth and/or development is not too low/little or too high/much ("unbalanced growth and/or development"). This may be with reference to published figures that define the healthy or normal growth and/or development of an infant with reference to a population (geographic, demographic, ethnic, *etc*) within which the infant belongs, or with reference to the growth and/or development an unhealthy infant or group of unhealthy infants. Examples of published references include the WHO growth curve (WHO, 2006).

The term "growth and/or development" as used herein may refer to growth and/or development of the brain of an infant and/or the cognitive function of the infant, as further defined below, and/or to growth and/or development of the body of an infant and/or the infant's body composition, also as further defined below.

In some embodiments (a), the proteinaceous composition of formula (i) comprises threonine in an amount from 3.2-4.5 g / 100 g protein, more suitably in an amount from 3.5-4.0 g / 100 g protein, and/or the proteinaceous composition of formula (i) comprises tryptophan in an amount from 0.7-1.0 g / 100 g protein, more suitably in an amount from 0.8-0.9 g / 100 g protein. Suitably, the proteinaceous composition of formula (i) comprises 3.2-4.5 g threonine per 100 g protein, more suitably 3.5-4.0 g threonine per 100 g protein, and the proteinaceous composition of formula (i) further comprises 0.7-1.0 g per 100 g protein, more suitably 0.8-0.9 g per 100 g protein.

In some embodiments (b), the proteinaceous composition of formula (i) comprises a ratio of tryptophan to neutral amino acids (isoleucine, leucine, valine, phenylalanine, tyrosine, and methionine) of from 1:34.1 (0.029) to 1:40.1 (0.025), even more suitably, the proteinaceous composition of formula (i) comprises a ratio of from 1:35.1 (0.028) to 1:39.1 (0.026), most suitably the proteinaceous composition of formula (i) comprises a ratio of from 1:36.1 (0.028) to 1:38.1 (0.026).

In an exemplary embodiment, the proteinaceous composition of formula (i) complies with both (a) and (b).

### Brain and Cognitive Function

Balanced growth and/or development may refer to the balanced growth and/or development of the brain of an infant and/or the cognitive function of the infant. This may refer to physical development of the brain, including neurotransmitter activity and also brain or head circumference. This may also refer to any brain function or behaviour observed in the infant or later in the life of the infant, such as mood, appetite, sleep, memory, learning, and some social behaviours of the infant. It may also refer to preventing or reducing the infant's risk for developing a psychiatric disease in later life (*e.g.,* an affective disorder, depression, schizophrenia).

As described herein, the recommended intakes determined for the essential amino acids that are associated with brain function, such as tryptophan and threonine, were found to be different to those found in commercially available formulas and in human breast milk. Furthermore, the ratio between the neutral amino acids (valine, leucine, isoleucine, phenylalanine, tyrosine, and methionine) and tryptophan was also found to be significantly different to the recommended ratio, wherein it has been stated that an altered ratio might have possible implications on brain development. It is therefore believed that formulas that comprise the optimal amino acid profile as herein defined advantageously promote, assist, or achieve balanced growth or development of brain and cognitive function in infants.

### Body Growth, Development and Composition

Balanced growth and/or development may refer to the balanced growth and/or development of the body of an infant and/or the infant's body composition. This may refer to the height, weight, fat distribution (*e.g.*, visceral fat versus subcutaneous fat), or other parameter of the infant, such parameters being well known to those skilled in the art.

In the studies performed on human infants described herein, the recommended intakes determined for the essential amino acids that are associated with body growth and body function (including insulin sensitivity), such as leucine and tryptophan, were found to be different to those found in commercially available formulas and in human breast milk. Furthermore, in the piglet growth studies performed, the growth rate of the piglets ingesting the optimised amino acid profile was similar to those ingesting the non-adjusted amino acid profile but with a higher protein level, and also with no adverse developmental effects being detected. These results suggest that the optimised essential amino acid composition allows for similar weight gain compared with a composition containing a higher amount of total protein and a non-adjusted essential amino acid composition.

It is therefore believed that formulas that comprise the optimal amino acid profile as herein defined advantageously promote, assist, or achieve balanced growth or development of body and body composition in infants.

Accordingly, the present invention also provides a method of promoting, assisting or achieving growth or development of an infant's body, and/or an infant's body composition, wherein the method comprises administering to the infant a formula of the present invention.

## REDUCING THE RISK OF OBESITY LATER IN LIFE

In the growth studies described herein, it was observed that that the growth rate of the piglets ingesting the two formulas containing non-adjusted amino acid profile (one with 80% protein of the control formula) differed. In particular, the piglets who ingested the isocaloric formula with 20% lower protein exhibited a significantly lower growth rate. It is noted that the volume of intake of these piglets was controlled such that the piglets were not able to ingest more of the formula, even if this was desired.

It is known that lowering protein levels below the minimal requirements for growth may lead to compensatory intake of formula to meet protein requirements and thus pose a risk of overconsumption of energy from fats and carbohydrates (Formon, 1999). Therefore, although it has been previously proposed that infant formulas containing low protein may reduce the risk of development of obesity in the infant at a later stage of life (Koletzko, 2009), it is now apparent that it is also the protein quality, and not only the protein quantity, that needs to be optimised in order to satisfactorily reduce the risk of obesity in the infant at a later stage of life.

In the growth studies described herein, it was also observed that the growth rate of the piglets ingesting the optimised amino acid profile was higher compared to those ingesting the non-adjusted amino acid profile of the same protein level, and that the growth rate was similar to those ingesting the non-adjusted amino acid profile but with a higher protein level.

Moreover, there is consistent evidence that growth during the first year(s) of life is associated with overweight later in childhood, adolescence or adulthood (Baird, 2005; Dennison, 2006; Silverwood, 2009; Ong, 2009; Taveras, 2009; and Tzoulaki, 2010).

Therefore it is proposed that formulations can be produced with lowered levels of total protein but with optimal amino acid profiles as defined herein, thus meeting the needs of infants and therefore promoting balanced growth and/or development in infants while preventing or reducing the risk of obesity in the infant at a later stage of life, and also to prevent or reduce the risk of obesity-related diseases and conditions such as metabolic diseases (*e.g.*, metabolic syndrome, diabetes), and cardiovascular disease.

## ADMINISTRATION

Also disclosed is a method for providing nutrition to an infant, the method comprising administering to the infant a proteinaceous composition or a formula of the present invention. Suitably, the infant is a human infant.

We also disclose a method for providing nutrition to an infant, the method comprising the steps a) admixing i) a nutritionally or pharmaceutically acceptable liquid (*e.g.*, water); and ii) a dry composition, wherein the dry composition comprises the proteinaceous composition or formula of the present invention, and step b) administering the liquid composition obtained in step a) to an infant.

## <u>EXAMPLES</u>

**Example 1: Lysine, methionine, threonine, tryptophan, valine, isoleucine and**

**leucine requirements in infants**

Example 1 describes the determination of the essential amino acid requirements in infants by way of the indicator amino acid oxidation (IAAO) method, and the subsequent definition of the recommended ranges of dietary requirements for each essential amino acid. The infants all had a gestational age of 37-43 weeks, a birth weight of more than 2500 grams and a postnatal age of <28 days, and exhibited a weight gain rate of > 5 $g \cdot kg^{-1} \cdot d^{-1}$ in the preceding 5 days (this weight gain rate is an indication of good health).

**IAAO Method**

In the IAAO method, each infant was fed an amino acid based formula where each essential amino acid was present in excess except the essential amino acid to be tested. The infant was randomly assigned to receive the test amino acid in an amount ranging from deficient to excess (*i.e.,* each infant was given one specific level of the test amino acid). Phenylalanine, labelled with a stable isotope, was used as the indicator amino acid.

The IAAO method (Zello, 1993) is based on the concept that when the test amino acid intake is insufficient to meet the infant's requirements, protein synthesis will be limited and all of the amino acids will be oxidised, including the indicator amino acid. Oxidation of the indicator amino acid can be measured in expired air as $^{13}CO_2$.

Figure 1 shows an example of the graph plotted by the IAAO method for a test amino acid. As can be seen in Figure 1, as the dietary intake of the test amino acid (shown on the *x*-axis) increases, protein synthesis increases and the oxidation rate of the indicator amino acid (shown on the *y*-axis) decreases until the requirement of the test amino acid is met (indicated as the breakpoint). Once the requirement of the test amino acid is met, a further increase in its intake will have no further influence on the oxidation rate of the indicator amino acid. Thus the breakpoint determines the dietary requirement of the test amino acid in this setting.

**IAAO Method** - **Protocol**

24 hours before the study day, the infants consumed their test formula (including the specific level of the test amino acid being given for each particular infant) for adaptation, with the feeding regime conforming to that of the hospital. During the study day, the feeding regime was changed to hourly bolus feeding of the infant's test formula to ensure a metabolic steady state in feed condition. In order to quantify individual $CO_2$ production, the infants received a primed (14 $\mu$mol/kg) continuous (9 $\mu$mol/kg/h) infusion of [$^{13}C$]bicarbonate (sterile pyrogen free, 99% $^{13}C$ APE; Cambridge Isotopes, Woburn, MA) for 3 hours (Riedijk, 2005). Directly following the 3 hour bicarbonate infusion, a primed (34 $\mu$mol/kg) continuous (27 $\mu$mol/kg/h) enteral infusion of L-[1-$^{13}C$]phenylalanine (99% $^{13}C$ APE; Cambridge Isotopes) was given for 4 hours. To minimise invasiveness the tracers were given enterally by means of a gastric tube.

Breath samples were collected by means of the direct sampling method described by van der Schoor (2004). At baseline, two duplicate breath samples were obtained before tracer infusion. During the last 45 minutes of [$^{13}C$]bi-carbonate infusion, and during the last hour ofL-[1-$^{13}C$]phenylalanine infusion, duplicated samples were collected every ten and fifteen minutes, respectively. Samples were stored at room temperature until monthly shipment to the Netherlands for analysis at the mass spectrometry laboratory of the Erasmus Medical Center, Rotterdam. Expired $^{13}CO_2$ enrichment was measured by isotope mass spectrometry (ABCA; Europe Scientific, van Loenen Instruments, Leiden, the Netherlands), and reported in units of atom percent excess (APE).

For each participant, the estimated body $CO_2$ production was calculated, as described previously (Riedijk, 2005). The rate of fractional [1-$^{13}C$]phenylalanine oxidation was calculated using this equation:

$$\text{Fractional phenylalanine oxidation } (\%) = [IE_{PHE} \times i_B]/[i_{PHE} \times IE_B] \times 100\%$$

Where $IE_{PHE}$ is the excess $^{13}C$ isotopic enrichment in expired air during [1-$^{13}C$]phenylalanine infusion (APE), $i_B$ is the infusion rate of [$^{13}C$]bicarbonate ($\mu$mol/kg/h), $i_{PHE}$ is the infusion rate of [1-$^{13}C$]phenylalanine ($\mu$mol/kg/h), and $IE_B$ is the excess $^{13}C$ isotopic enrichment in expired air during [$^{13}C$]bicarbonate infusion (van Goudoever, 1993).

The results of the IAAO studies for amino acids: lysine, methionine, threonine, tryptophan, valine, isoleucine and leucine, are described in Examples 1a-1g, and with the results also illustrated graphically in Figures 2-8. As phenylalanine was used as the indicator amino acid, each of Figures 2-8 plots the oxidation rates of the phenylalanine ($F^{13}CO_2$) against dietary intake of the test amino acid. Each point represents an individual infant who was fed an amino acid based formula where each essential amino acid was present in excess except the essential amino acid to be tested, where the test amino acid was present in an amount ranging from deficient to excess.

**Recommended dietary intake ranges**

The recommended dietary intake range for the essential amino acids in each of Examples 1a-1g was then determined using the following strategy.

First, the dietary requirement (breakpoint) of the IAAO results was estimated using a biphasic linear regression crossover model and was taken as the primary parameter.

To ensure that nearly all individuals meet the amino acid requirements, a safe level of intake was defined. The safe level of protein intake proposed by the WHO (WHO/FAO/UNU, 2007) was used, defining the safe level of protein intake as 125% of the average protein requirement. In this instance, the safe level of amino acid intake was therefore calculated to be > 125% of the primary parameter (breakpoint value) obtained as described above, to reach the population safe requirement value.

An assumption was made that this primary parameter (breakpoint value) is higher than the requirement of protein bound amino acids based on the study by Metges (2000) which showed > 20% higher first pass oxidation rate when free amino acids are ingested compared to protein bound amino acids. Therefore 20% of the estimated requirement was subtracted from the population safe requirement value, which is believed to be conservative *(i.e.,* an overestimate rather than underestimate).

The net effect of the above two calculations is therefore that the breakpoint equals the recommended intake (measured in mg·kg$^{-1}$·d$^{-1}$).

The recommended intake measured in mg·kg$^{-1}$·d$^{-1}$ was then converted to units of mg (of amino acid) / 100 mL (of infant formula). This calculation was made by dividing the recommended intake (mg·kg$^{-1}$·d$^{-1}$) by the volume intake by an infant of 150 mL·kg$^{-1}$·d$^{-1}$ (Shaw, 2001) and multiplying by 100. This is described below as the recommended dietary intake for each amino acid, expressed in mg (amino acid) / 100 mL (infant formula).

This recommended dietary intake range was also converted into units of g (amino acid) / 100 g protein as follows. The calculations were based on a protein intake level of 0.9 - 1.4 g (protein) / 100 mL (infant formula), or 900 - 1,400 mg (protein) / 100 mL (infant formula) (Koletzko, 2009). This protein intake level correlates to 1.4 to 2.1 g protein / 100 kcal infant formula based on an energy level of 66 kcal per 100 mL. The recommended dietary intake for the amino acid expressed in mg / 100 mL was therefore divided by the upper limit of protein intake level (1,400 mg / 100 mL) and multiplied by 100 to reach the lower limit of the proposed interval. The recommended dietary intake for the amino acid expressed in mg / 100 mL was also divided by the lower limit of protein intake level (900 mg / 100 mL) and multiplied by 100 to reach the upper limit of the proposed interval.

**Example Ia: Lysine**

Using the method described above, the breakpoint for lysine by a group of 21 infants was estimated to be 130 mg·kg$^{-1}$·d$^{-1}$ (this is also shown in Figure 2), and the recommended dietary intake for lysine was then determined to be 87 mg / 100 mL (of infant formula). Converted into g / 100 g protein as described above, the result for lysine is 6.2 - 9.7 g / 100 g protein.

**Example 1b: Methionine**

Using the method described above, the mean breakpoint for methionine by a group of 33 infants was estimated to be 38 mg·kg$^{-1}$·d$^{-1}$ (this is also shown in Figure 3). It is noted that this estimation was made based on a diet that contained an excess of cysteine

(91 mg·kg$^{-1}$·d$^{-1}$). The recommended dietary intake for methionine was then determined to be 25 mg / 100 mL (of infant formula). Converted into g / 100 g protein as described above, the result for methionine is 1.8 - 2.8 g / 100 g protein.

**Example 1c: Threonine**

Using the method described above, the breakpoint for threonine by a group of 32 infants was estimated to be 68 mg·kg$^{-1}$·d$^{-1}$ (this is also shown in Figure 4) and the recommended dietary intake for threonine was then determined to be 45 mg / 100 mL (of infant formula). Converted into g / 100 g protein as described above, the result for threonine is 3.2 - 5.0 g / 100 g protein.

**Example 1d: Tryptophan**

Using the method described above, the breakpoint for tryptophan by a group of 30 infants was estimated to be 15 mg·kg$^{-1}$·d$^{-1}$ (this is also shown in Figure 5) and the recommended dietary intake for tryptophan was then determined to be 10 mg / 100 mL (of infant formula). Converted into g / 100 g protein as described above, the result for tryptophan is 0.7 - 1.1 g / 100 g protein.

**Example Ie: Valine**

Using the method described above, the breakpoint for valine by a group of 28 infants was estimated to be 110 mg·kg$^{-1}$·d$^{-1}$ (this is also shown in Figure 6) and the recommended dietary intake for valine was then determined to be 73 mg / 100 mL (of infant formula). Converted into g / 100 g protein as described above, the result for valine is 5.2 - 8.1 g / 100 g protein.

**Example 1f: Isoleucine**

Using the method described above, the breakpoint for isoleucine by a group of 22 infants was estimated to be 105 mg·kg$^{-1}$·d$^{-1}$ (this is also shown in Figure 7) and the recommended dietary intake for isoleucine was then determined to be 70 mg / 100 mL (of infant formula). Converted into g / 100 g protein as described above, the result for isoleucine is 5.0 - 7.8 g / 100 g protein.

### Example 1g: Leucine

Using the method described above, the breakpoint for leucine by a group of 33 infants was estimated to be 140 mg·kg$^{-1}$·d$^{-1}$ (this is also shown in Figure 8) and the recommended dietary intake for leucine was then determined to be 93 mg / 100 mL (of infant formula). Converted into g / 100 g protein as described above, the result for leucine is 6.6 - 10.3 g / 100 g protein.

### Example 2: Histidine, phenylalanine, cysteine and tyrosine requirements in infants

The IAAO methodology was not performed for the essential amino acids: histidine and phenylalanine. Moreover, the IAAO methodology was (cannot) be used for the conditionally essential amino acids: cysteine and tyrosine. Thus, the levels of these amino acids were determined as explained below.

### Example 2a: Histidine

The recommended dietary intake for histidine is proposed to be 41 mg / 100 kcal, based on the level in human milk reference protein (Koletzko, 2005). With an infant formula providing 66 kcal / 100 mL, this results in 27 mg of histidine / 100 mL. This level (mg / 100 mL) was converted into g / 100 g protein as described in Example 1 above, to be 1.9 - 3.0 g / 100 g protein.

### Example 2b: Phenylalanine

The recommended dietary intake for phenylalanine is proposed to be 81 mg / 100 kcal, based on the level in human milk reference protein (Koletzko, 2005). With an infant formula providing 66 kcal / 100 mL, this results in 54 mg of phenylalanine / 100 mL. This level (mg / 100 mL) was converted into g / 100 g protein as described in Example 1 above, to be 3.8 - 5.9 g / 100 g protein.

### Example 2c: Cysteine

ESPGHAN proposes a ratio of methionine : cysteine in the range of 0.7-1.5 to 1 (Koletzko, 2005). The recommended dietary intake for methionine was determined to be 25 mg / 100 mL (as described above, see Example 1b). Therefore, the ratio of methionine : cysteine of 0.7 to 1 gives a level of cysteine of 36 mg / 100 mL and the ratio of methionine : cysteine of 1.5 to 1 gives a level of cysteine of 17 mg / 100 mL. Therefore the recommended dietary intake range for cysteine is 17 - 36 mg / 100 mL (of infant formula).

Because the recommended dietary intake (in mg / 100 mL) is a range and not a single figure, the range was converted into g / 100 g protein in a similar manner to the calculations described in Example 1 above, but where the lower limit of the range for cysteine expressed in mg / 100 mL was divided by the upper limit of protein intake level (1,400 mg / 100 mL) and multiplied by 100 to reach the lower limit of the proposed interval. The upper limit of the range for cysteine expressed in mg / 100 mL was divided by the lower limit of protein intake level (900 mg / 100 mL) and multiplied by 100 to reach the upper limit of the proposed interval. This led to a result for cysteine of 1.2 - 4.0 g / 100 g protein.

### Example 2d: Tyrosine

ESPGHAN proposes a ratio of phenylalanine : tyrosine in the range of 0.7-1.5 to 1 (Koletzko, 2005). The ESPGAN recommended dietary intake for phenylalanine is 54 mg / 100 mL (as above, Example 2b). Therefore, the ratio of phenylalanine : tyrosine of 0.7 to 1 gives a level of tyrosine of 76 mg / 100 mL and the ratio of phenylalanine : tyrosine of 1.5 to 1 gives a level of tyrosine of 36 mg / 100 mL. Therefore the recommended dietary intake range for tyrosine is 36 - 76 mg / 100 mL (of infant formula).

Because the recommended dietary intake (in mg / 100 mL) is a range and not a single figure, the range was converted into g / 100 g protein in a similar manner to the calculations described in Example 1 above, but where the lower limit of the range for tyrosine expressed in mg / 100 mL was divided by the upper limit of protein intake level (1,400 mg / 100 mL) and multiplied by 100 to reach the lower limit of the proposed interval. The upper limit of the range for tyrosine expressed in mg / 100 mL was divided by the lower limit of protein intake level (900 mg / 100 mL) and multiplied by 100 to reach the upper limit of the proposed interval. This led to a result for tyrosine of 2.6 - 8.4 g / 100 g protein.

### Example 3: Amino acid profiles

Bringing together the results from Examples 1 and 2, Table 1 below lists the recommended dietary intake range for each essential amino acid both in mg (amino acid) / 100 mL (of infant formula), and in g (amino acid) / 100 g protein, as described earlier. Also included in Table 1 is the ratio of tryptophan to the neutral amino acids (valine, leucine, isoleucine, phenylalanine, tyrosine, and methionine) calculated based on the results in mg / 100 mL. This ratio is a range calculated using the mean level of tyrosine levels (56 mg / 100 mL), and then with 10% variation of the ratio permitted (e.g. to compensate for product-allowed variation). The ratio was thus determined to be from 1:33.4 (0.030) to 1:40.8 (0.025).

Table 1: Recommended dietary intake range for each essential amino acid as determined in Examples 1 and 2.

| Essential amino acid | Value | | |
|---|---|---|---|
| [Units] | mg / kg body weight / day | mg / 100 mL | g / 100 g |
| Cysteine | N.D. | 17-36 | 1.2-4.0 |
| Histidine | N.D. | 27 | 1.9-3.0 |
| Isoleucine | 105 | 70 | 5.0-7.8 |
| Leucine | 140 | 93 | 6.6-10.3 |
| Lysine | 130 | 87 | 6.2-9.7 |
| Methionine | 38 | 25 | 1.8-2.8 |
| Phenylalanine | N.D. | 54 | 3.8-5.9 |
| Threonine | 68 | 45 | 3.2-5.0 |
| Tryptophan | 15 | 10 | 0.7-1.1 |
| Tyrosine | N.D. | 36-76 | 2.6-8.4 |
| Valine | 110 | 73 | 5.2-8.1 |
| Tryptophan : neutral amino acids | | 1:33.4 (0.028) to 1:40.8 (0.025) | |
| **Protein (g / 100 mL)** | | | **0.9-1.4** |
| **Protein (g / 100 kcal)** | | | **1.4-2.1** |

In general, the essential amino acid content of breast milk has been considered as an appropriate requirement estimate (WHO, 2007). However, it is recognised that such intakes may be different (e.g., generous) compared with actual demands. In the absence of secure values, approaches to improve the requirement estimates, such as a factorial approach based on growth and maintenance components of protein requirements, result in calculated values that are still based on human milk as the reference.

In the calculations described in Example 1 to determine the recommended dietary intake values for lysine, methionine, threonine, tryptophan, valine, isoleucine and leucine, human milk was not the reference value. Instead, these recommended dietary intake values are based on the actual measured requirement levels in infants, namely the breakpoint values. Furthermore, these calculations have permitted a determination of the recommendations for essential amino acids expressed in units that can be used when in infant formulas, and are therefore useful to the infant formula manufacturing industry.

The amino acid composition of milk is postulated to be a critical factor in the nutrition of neonates, since they are growing rapidly and undergoing a series of important maturational processes. Shortage or excess of one specific essential amino acid will limit effective use of the other essential amino acids in these processes of body growth and maturation. Furthermore, apart from the need to meet the requirement level of an individual essential amino acid, an optimal balance between those essential amino acids in the total composition is (anticipated to be) crucial to support optimal growth and/or development.

Comparing the breakpoints and recommended dietary intake values calculated as described herein to commercially available formulas (which for a large part are based on bovine milk or bovine milk components such as bovine casein or bovine whey), it can be seen that a completely rebalanced profile of essential amino acids has been determined. It is proposed that use of a composition that is based on this profile in the formulation of an infant formula will optimise growth and/or development in an infant.

Interestingly, it is noted that some of these ranges deviate from the levels reported in human breast milk or used in commercially available infant formulas. Thus, through these experiments it has been surprisingly discovered that the levels of essential amino acids required for protein synthesis (and therefore for growth and/or development) in term infants are met at intake levels where the intake levels differs distinctly from that found in human breast milk and in commercially available formulas for specific essential amino acids, where the combined profile of two or more of those intake levels differs distinctly from that found in human breast milk and in commercially available formulas for specific essential amino acids, and where the ratios between several amino acids differs distinctly from those found in human breast milk and in commercially available formulas.

For instance, the individual breakpoints for the essential amino acids that act as precursors for neurotransmitters in the brain, such as tryptophan and threonine, are lower than the levels found in human breast milk and/or commercially available formulas. Furthermore, the ratio between tryptophan and the neutral amino acids (valine, leucine, isoleucine, phenylalanine, tyrosine, and methionine) may affect the bioavailability of tryptophan, a precursor for the production of serotonin in the brain, and was calculated to be from 1:33.4 (0.030) to 1:40.8 (0.025) and is therefore different to that found in human breast milk and/or commercially available formulas. This is of particular interest since it has been suggested that exposure to high levels of serotonin during early development may affect the speed of development of the cortex, thereby increasing the risk for psychiatric disease in later life (Riccio, 2011).

### Example 4: Amino acid sources

Combinations of different sources of amino acids were investigated to determine whether their amino acid profile would meet the recommended amino acid profile (*i.e.,* the recommended dietary intake range for each essential amino as shown in the above examples, and in particular Table 1).

The sources are listed in Table 2, along with their amino acid profile (g / 100 g protein), and the references for where these profiles were sourced.

Table 2: Amino acid sources (expressed as g / 100 g protein)

| Amino acid | Amino acid sources | | | | | | |
|---|---|---|---|---|---|---|---|
| | Pea protein Isolate | Potato Protein Isolate | Rice Protein Isolate | Soy Protein Isolate | Algal Protein Spirulina | Casein | Cheese (sweet) Whey |
| Cysteine | 1.1 | 0.95 | 1.75 | 1.2 | 0.7 | 0.4 | 2.6 |
| Histidine | 2.7 | 2.28 | 2.37 | 2.5 | 1.1 | 3.1 | 1.6 |
| Isoleucine | 4.7 | 5.20 | 4.31 | 5.1 | 3.2 | 5.8 | 7.2 |
| Leucine | 8.7 | 10.69 | 8.49 | 8.35 | 4.9 | 10.1 | 11.8 |
| Lysine | 7.7 | 7.87 | 3.60 | 5.6 | 3.0 | 8.4 | 10.7 |
| Methionine | 1.2 | 2.68 | 3.70 | 1.35 | 1.1 | 2.9 | 2.4 |
| Phenylalanine | 5.6 | 6.47 | 5.47 | 5.45 | 2.8 | 5.4 | 3.8 |
| Threonine | 3.9 | 7.11 | 3.70 | 3.9 | 3.0 | 4.6 | 8.6 |
| Tryptophan | 1.0 | 1.47 | 0.92 | 1.25 | 0.9 | 1.4 | 1.7 |
| Tyrosine | 3.9 | 6.37 | 5.35 | 3.9 | 2.6 | 5.8 | 3.4 |
| Valine | 5.2 | 5.62 | 6.14 | 5.1 | 3.5 | 7.5 | 6.8 |
| **Reference** | **a** | **b** | **c** | **d** | **e** | | |

The references in Table 2 are as follows:

a: *Commercially available protein source, Pisane C9*
b: *Commercially available protein source, Solanic 206P*
c: *Commercially available protein source, Remypro N80+*
d: *Commercially available protein source, Supro 772 LN*
e: *http://en.wikipedia.org/wiki/Spirulina_(dietary_supplement)#Protein_and_ amino -acid_content [accessed on September 3, 2012].*

Suitable combinations of amino acid sources are outlined in Tables 3-9, and their compliance with the recommended amino acid range and the ratio of tryptophan : neutral amino acids (trp:NAA) of Table 1 is indicated. It will be appreciated by those skilled in the art that any amino acid insufficiency (*e.g.*, where the amount is <100% of the recommended amount), as indicated in Tables 3-9 by "Below range", this may be remedied by the addition of free amino acid.

Table 3: Amino acid profile (g / 100 g protein) for the combination of pea protein isolate and rice protein isolate (ratio of 35:65) and compliance with Table 1 levels

| Amino acid | Table 1 levels (g / 100 g) | Combination levels (g / 100 g) | Compliance with Table 1 levels |
|---|---|---|---|
| Cysteine | 1.2-4.0 | 1.5 | Within range |
| Histidine | 1.9-3.0 | 2.5 | Within range |
| Isoleucine | 5.0-7.8 | 4.4 | Below range |
| Leucine | 6.6-10.3 | 8.6 | Within range |
| Lysine | 6.2-9.7 | 5.0 | Below range |
| Methionine | 1.8-2.8 | 2.8 | Within range |
| Phenylalanine | 3.8-5.9 | 5.5 | Within range |
| Threonine | 3.2-5.0 | 3.8 | Within range |
| Tryptophan | 0.7-1.1 | 0.9 | Within range |
| Tyrosine | 2.6-8.4 | 4.8 | Within range |
| Valine | 5.2-8.1 | 5.8 | Within range |

It is noted that addition of isoleucine and lysine *(e.g.,* by way of free amino acid) is needed for the composition to fall within the Table 1 ranges for each amino acid. Isoleucine is a neutral amino acid. Therefore, addition of isoleucine as free amino acid will adjust the ratio of tryptophan to neutral amino acids. It is also noted that if the level of isoleucine is increased to the minimum Table 1 levels (5.0 g / 100 g), then the ratio of tryptophan : neutral amino acids will be 1:36.1 and therefore within the range of the Table 1 ratio.

Accordingly, the combination of pea protein isolate and rice protein isolate (in a ratio of 35:65), with additional isoleucine and lysine added by way of free amino acid, meets the levels outlined in Table 1.

Table 4: Amino acid profile (g /100 g protein) for the combination of rice protein isolate and casein (ratio of 75:25) and compliance with Table 1 levels

| Amino acid | Table 1 levels (g /100 g) | Combination levels (g / 100 g) | Compliance with Table 1 levels |
|---|---|---|---|
| Cysteine | 1.2-4.0 | 1.1 | Below range |
| Histidine | 1.9-3.0 | 2.0 | Within range |
| Isoleucine | 5.0-7.8 | 3.7 | Below range |
| Leucine | 6.6-10.3 | 7.1 | Within range |
| Lysine | 6.2-9.7 | 4.3 | Below range |
| Methionine | 1.8-2.8 | 2.8 | Within range |
| Phenylalanine | 3.8-5.9 | 4.4 | Within range |
| Threonine | 3.2-5.0 | 3.1 | Below range |
| Tryptophan | 0.7-1.1 | 0.8 | Within range |
| Tyrosine | 2.6-8.4 | 4.4 | Within range |
| Valine | 5.2-8.1 | 5.2 | Within range |

It is noted that addition of cysteine, isoleucine, lysine, and threonine (e.g., by way of free amino acid) is needed for the composition to fall within the Table 1 ranges for each amino acid. Isoleucine is a neutral amino acid. Therefore, addition of isoleucine as free amino acid will adjust the ratio of tryptophan to neutral amino acids. It is also noted that if the level of isoleucine is increased to the minimum Table 1 levels (5.0 g / 100 g), then the ratio of tryptophan : neutral amino acids will be 1:36.1 and therefore within the range of the Table 1 ratio.

Accordingly, the combination of rice protein isolate and casein (in a ratio of 75:25), with additional cysteine, isoleucine, lysine, and threonine added by way of free amino acid, meets the levels outlined in Table 1.

Table 5: Amino acid profile (g / 100 g protein) for the combination of rice protein isolate and potato protein isolate (ratio of 75:25) and compliance with Table 1 levels

| Amino acid | Table 1 levels (g / 100 g) | Combination levels (g / 100 g) | Compliance with Table 1 levels |
|---|---|---|---|
| Cysteine | 1.2-4.0 | 1.2 | Within range |
| Histidine | 1.9-3.0 | 1.9 | Within range |
| Isoleucine | 5.0-7.8 | 3.6 | Below range |
| Leucine | 6.6-10.3 | 7.2 | Within range |
| Lysine | 6.2-9.7 | 3.7 | Below range |
| Methionine | 1.8-2.8 | 2.8 | Within range |
| Phenylalanine | 3.8-5.9 | 4.6 | Within range |
| Threonine | 3.2-5.0 | 3.6 | Within range |
| Tryptophan | 0.7-1.1 | 0.8 | Within range |
| Tyrosine | 2.6-8.4 | 4.5 | Within range |
| Valine | 5.2-8.1 | 4.8 | Below range |

It is noted that addition of isoleucine, lysine, and valine (e.g., by way of free amino acid) is needed for the composition to fall within the Table 1 ranges for each amino acid. Isoleucine and valine are neutral amino acids. Therefore, addition of isoleucine and valine as free amino acids will adjust the ratio of tryptophan to neutral amino acids. It is also noted that if the levels of isoleucine and valine are increased to the minimum Table 1 levels (5.0 g / 100 g and 5.2 g / 100 g respectively), then the ratio of tryptophan : neutral amino acids will be 1:36.6 and therefore within the range of the Table 1 ratio.

Accordingly, the combination of rice protein isolate and potato protein isolate (in a ratio of 75:25), with additional isoleucine, lysine, and valine added by way of free amino acid, meets the levels outlined in Table 1.

Table 6: Amino acid profile (g / 100 g protein) for the combination of rice protein isolate and spirulina (ratio of 82:18) and compliance with Table 1 levels

| Amino acid | Table 1 levels (g / 100 g) | Combination levels (g / 100 g) | Compliance with Table 1 levels |
|---|---|---|---|
| Cysteine | 1.2-4.0 | 1.3 | Within range |
| Histidine | 1.9-3.0 | 1.8 | Below range |
| Isoleucine | 5.0-7.8 | 3.5 | Below range |
| Leucine | 6.6-10.3 | 6.7 | Within range |
| Lysine | 6.2-9.7 | 3.0 | Below range |
| Methionine | 1.8-2.8 | 2.8 | Within range |
| Phenylalanine | 3.8-5.9 | 4.2 | Within range |
| Threonine | 3.2-5.0 | 3.0 | Below range |
| Tryptophan | 0.7-1.1 | 0.8 | Within range |
| Tyrosine | 2.6-8.4 | 4.1 | Within range |

(continued)

| Amino acid | Table 1 levels (g / 100 g) | Combination levels (g / 100 g) | Compliance with Table 1 levels |
|---|---|---|---|
| Valine | 5.2-8.1 | 4.8 | Below range |

It is noted that addition of histidine, isoleucine, lysine, threonine, and valine (e.g., by way of free amino acid) is needed for the composition to fall within the Table 1 ranges for each amino acid. Isoleucine and valine are neutral amino acids. Therefore, addition of isoleucine and valine as free amino acids will adjust the ratio of tryptophan to neutral amino acids. It is also noted that if the levels of isoleucine and valine are increased to the minimum Table 1 levels (5.0 g / 100 g and 5.2 g / 100 g respectively), then the ratio of tryptophan : neutral amino acids will be 1:35 and therefore within the range of the Table 1 ratio.

Accordingly, the combination of rice protein isolate and spirulina (in a ratio of 82:18), with additional histidine, isoleucine, lysine, threonine, and valine added by way of free amino acid, meets the levels outlined in Table 1.

Table 7: Amino acid profile (g /100 g protein) for the combination of pea protein isolate and rice protein isolate (ratio of 37:63) and compliance with Table 1 levels

| Amino acid | Table 1 levels (g / 100 g) | Combination levels (g / 100 g) | Compliance with Table 1 levels |
|---|---|---|---|
| Cysteine | 1.2-4.0 | 1.4 | Within range |
| Histidine | 1.9-3.0 | 2.4 | Within range |
| Isoleucine | 5.0-7.8 | 4.2 | Below range |
| Leucine | 6.6-10.3 | 8.1 | Within range |
| Lysine | 6.2-9.7 | 4.9 | Below range |
| Methionine | 1.8-2.8 | 2.6 | Within range |
| Phenylalanine | 3.8-5.9 | 5.2 | Within range |
| Threonine | 3.2-5.0 | 3.6 | Within range |
| Tryptophan | 0.7-1.1 | 0.9 | Within range |
| Tyrosine | 2.6-8.4 | 4.6 | Within range |
| Valine | 5.2-8.1 | 5.5 | Within range |

It is noted that addition of isoleucine and lysine (e.g., by way of free amino acid) is needed for the composition to fall within the Table 1 ranges for each amino acid. Isoleucine is a neutral amino acid. Therefore, addition of isoleucine as free amino acid will adjust the ratio of tryptophan to neutral amino acids. It is also noted that if the level of isoleucine is increased to the minimum Table 1 levels (5.0 g / 100 g), then the ratio of tryptophan : neutral amino acids will be 1:34.4 and therefore within the range of the Table 1 ratio.

Accordingly, the combination of pea protein isolate and rice protein isolate (in a ratio of 37:63), with additional isoleucine and leucine added by way of free amino acid, will meet the levels outlined in Table 1.

Table 8: Amino acid profile (g /100 g protein) for the combination of pea protein isolate and cheese (sweet) whey (ratio of 75:25) and compliance with Table 1 levels

| Amino acid | Table 1 levels (g / 100 g) | Combination levels (g / 100 g) | Compliance with Table 1 levels |
|---|---|---|---|
| Cysteine | 1.2-4.0 | 1.2 | Within range |
| Histidine | 1.9-3.0 | 1.9 | Within range |
| Isoleucine | 5.0-7.8 | 4.3 | Below range |
| Leucine | 6.6-10.3 | 7.6 | Within range |
| Lysine | 6.2-9.7 | 6.8 | Within range |

(continued)

| Amino acid | Table 1 levels (g / 100 g) | Combination levels (g / 100 g) | Compliance with Table 1 levels |
|---|---|---|---|
| Methionine | 1.8-2.8 | 1.2 | Below range |
| Phenylalanine | 3.8-5.9 | 4.1 | Within range |
| Threonine | 3.2-5.0 | 4.1 | Within range |
| Tryptophan | 0.7-1.1 | 0.9 | Within range |
| Tyrosine | 2.6-8.4 | 3.0 | Within range |
| Valine | 5.2-8.1 | 4.5 | Below range |

It is noted that addition of isoleucine, methionine, and valine (*e.g.*, by way of free amino acid) is needed for the composition to fall within the Table 1 ranges for each amino acid. Isoleucine, methionine, and valine are all neutral amino acids. Therefore, addition of isoleucine, methionine, and valine as free amino acids will adjust the ratio of tryptophan to neutral amino acids. It is also noted that if the levels of isoleucine, methionine and valine are increased to the minimum Table 1 levels (5.0 g / 100 g, 1.8 g / 100 g, and 5.2 g / 100 g respectively), then the ratio of tryptophan : neutral amino acids will be 1:29.7, which is below the range of the Table 1 ratio. Nevertheless, addition of further neutral amino acids (further isoleucine, methionine and/or valine, and/or any one of leucine, phenylalanine, or tyrosine) is possible to bring the ratio within the Table 1 range. For instance, if the levels of isoleucine, methionine, and valine are increased to 7.8 g / 100 g, 2.8 g / 100 g, and 8.1 g / 100 g respectively, then the ratio of tryptophan : neutral amino acids will be 1:37.1, which is within the range of the Table 1 ratio.

Accordingly, the combination of pea protein isolate and cheese (sweet) whey (in a ratio of 75:25), with additional isoleucine, methionine, and valine, and possibly also with additional leucine, phenylalanine, or tyrosine, added by way of free amino acid, will meet the levels outlined in Table 1.

Table 9: Amino acid profile (g / 100 g protein) for the combination of soy protein isolate and rice protein isolate (ratio of 56:44) and compliance with Table 1 levels

| Amino acid | Table 1 levels (g / 100 g) | Combination levels (g / 100 g) | Compliance with Table 1 levels |
|---|---|---|---|
| Cysteine | 1.2-4.0 | 1.3 | Within range |
| Histidine | 1.9-3.0 | 2.2 | Within range |
| Isoleucine | 5.0-7.8 | 4.3 | Below range |
| Leucine | 6.6-10.3 | 7.6 | Within range |
| Lysine | 6.2-9.7 | 4.2 | Below range |
| Methionine | 1.8-2.8 | 2.2 | Within range |
| Phenylalanine | 3.8-5.9 | 4.9 | Within range |
| Threonine | 3.2-5.0 | 3.4 | Within range |
| Tryptophan | 0.7-1.1 | 1.0 | Within range |
| Tyrosine | 2.6-8.4 | 4.1 | Within range |
| Valine | 5.2-8.1 | 5.0 | Below range |

It is noted that addition of isoleucine, lysine, and valine (*e.g.*, by way of free amino acid) is needed for the composition to fall within the Table 1 ranges for each amino acid. Isoleucine and valine are neutral amino acids. Therefore, addition of isoleucine and valine as free amino acids will adjust the ratio of tryptophan to neutral amino acids. It is also noted that if the levels of isoleucine and valine are increased to the minimum Table 1 levels (5.0 g / 100 g and 5.2 g / 100 g respectively), then the ratio of tryptophan : neutral amino acids will be 1:29, which is below the range of the Table 1 ratio. Nevertheless, addition of further neutral amino acids (further isoleucine and/or valine, and/or any one of leucine, methionine, phenylalanine, or tyrosine) is possible to bring the ratio within the Table 1 range. For instance, if the levels of isoleucine and valine are increased to 7.8 g / 100 g and 8.1 g / 100 g respectively, and the level of leucine is increased to 10 g / 100 g, then the ratio of tryptophan : neutral amino acids will be 1:37.1, which is within the range of the Table 1 ratio.

Accordingly, the combination of soy protein isolate and rice protein isolate (in a ratio of 56:44), with additional isoleucine, lysine, and valine, and possibly also with the addition of any one of leucine, methionine, phenylalanine, or tyrosine, added by way of free amino acid, will meet the levels outlined in Table 1.

Thus, it is demonstrated that there are many various options for achieving the desired amino acid profile.

**Example 5: Additional amino acid sources**

A further in-depth exercise was conducted to determine further sources of amino acids, which are suitable for inclusion in combinations of amino acid sources that can be used to meet the recommended amino acid profile (*i.e.,* the recommended dietary intake range for each essential amino as shown in the above examples, and in particular Table 1).

This exercise was done by collecting data on proteins from the UniProt database, which contains more than 500,000 entries and determining the amino acid profile of each protein.

These amino acid sources were then analysed for suitability (in combination with other amino acid sources) to meet the recommended amino acid profile, but were also scored / prioritised based on a number of other factors including their source, origin and availability, and any undesirable properties (*e.g.*, any proteins with allergenic properties like gluten).

The following key findings were made:

(1) It appears that it is not possible to identify an intact protein source that on its own matches the recommended amino acid profile.

(2) It does not appear possible to meet the recommended amino acid profile using two amino acid sources, where the first source is cow's milk protein and the second is included to ensure the combination matches the recommended amino acid profile.

(3) It appears possible to reach the recommended amino acid profile using a combination of three or more amino acid sources.

To elaborate on point (3), it is noted that suitable sources that may be used in combinations appear to include whey (including acid whey, sweet whey, alpha-lactalbumin enriched whey and whey hydrolysate), casein (including beta-casein and casein hydrolysate), skim milk, lactoferrin, colostrum, goat's milk protein, fish (including cod fish hydrolysate and Neptune krill), chicken protein (including chicken protein hydrolysate), pork protein (including pork protein hydrolysate), soy protein (including soy protein isolate and soy hydrolysate), pea protein (including pea protein isolate and pea protein hydrolysate), wheat protein (including wheat protein hydrolysate), rice protein (including rice protein hydrolysate), rice bran, potato protein (including potato protein isolate), lupin (including lupin protein from mature seeds, and sweet lupin concentrate), cotton (including cotton seed hydrolysate), canola, sesame, corn, oats, beans (including kidney bean), ferredoxin (derived from various plant sources), green plant sources (including RuBisCO).

Some possible combinations of amino acid sources include combinations of:

a) whey protein (enriched in alpha-lactalbumin), pea protein, and white rice protein (in relative amounts of 60:15:25 respectively with free amino acids also added to ensure compliance with the Table 1 results);

b) whey protein (enriched in alpha-lactalbumin), pea protein, and skim milk (in relative amounts of 25:8:67 respectively with free amino acids also added to ensure compliance with the Table 1 results);

c) whey protein (enriched in alpha-lactalbumin), pea protein, and goat's milk protein (in relative amounts of 21:14:65 respectively with free amino acids also added to ensure compliance with the Table 1 results);

d) sweet whey, acid whey, and oat protein (in relative amounts of 54:21:25 respectively with free amino acids also added to ensure compliance with the Table 1 results);

e) sweet whey, beta-casein (bovine), and pea protein (in relative amounts of 39:46:15 respectively with free amino acids also added to ensure compliance with the Table 1 results); and

f) whey protein (enriched in alpha-lactalbumin), pea protein , and potato protein (in relative amounts of 55:32:13 respectively with free amino acids also added to ensure compliance with the Table 1 results).

**Example 6: Growth studies**

A piglet model to evaluate growth poses a beneficial way of detecting effects of altered amino acid compositions on growth, since the growth of pigs is faster than that of infants. Therefore the model provides an excellent model to study effects of protein quantity and quality on growth.

The objective of the piglet study was to determine whether an optimised amino acid composition, low protein formula diet is associated with growth rates in piglets similar to that observed in piglets fed a normal protein diet with a non-adjusted amino acid composition.

Seventy-nine piglets (age: 7 days) were separated from their mothers and housed individually in cages for 17 days and reared with an automated, controlled milk supply system. Piglets were randomly assigned to one of three groups, fed the following diets: 1)

Control infant formula with normal levels of protein and a non-adjusted amino acid composition for infants (n=26);
2) Control formula with 20% less total protein without amino acid adjustment (n= 27);
3) A formula with an optimised amino acid composition based on the results described in the earlier examples, and with 20% lower total protein compared to the protein level of diet 1 (n=26).

The composition of each diet is shown in Table 10. All diets were iso-caloric, providing approximately 3835 kJ / L. During the study period the milk intake was adjusted every second day according to the bodyweight of the piglets. The amount of milk given to each piglet was based on a protein intake of 8 g/kg/day in the standard formula group which contained 44 g protein/L. The tryptophan : large neutral amino acids ratio was 1:16.5 (0.061), 1:16.1(0.062) and 1:33.5 (0.030) for diets 1, 2 and 3, respectively.

Table 10: Macronutrient and essential amino acid composition of the piglet diets

| Amount per litre | Diet 1 | Diet 2 | Diet 3 |
|---|---|---|---|
| Carbohydrate (g) | 70 | 74 | 74 |
| Protein (g) | 44 | 35 | 35 |
| Fat (g) | 50 | 52 | 52 |
| Dry matter (g) | 169 | 166 | 166 |
| Energy (kJ) | 3838 | 3832 | 3832 |
| Essential amino acids (g) | | | |
| Cysteine | 1.4 | 1.1 | 1.0 |
| Histidine | 2.1 | 1.7 | 0.9 |
| Isoleucine | 3.2 | 2.6 | 2.6 |
| Leucine | 5.5 | 4.4 | 3.4 |
| Lysine | 3.7 | 3.0 | 3.2 |
| Methionine | 0.9 | 0.7 | 0.9 |
| Phenylalanine | 2.5 | 2.0 | 1.9 |
| Threonine | 2.7 | 2.2 | 1.6 |
| Tryptophan | 1.1 | 0.9 | 0.4 |
| Tyrosine | 2.5 | 2.0 | 1.9 |
| Valine | 3.5 | 2.8 | 2.7 |
| Tryptophan: Neutral amino acids | 0.061 | 0.062 | 0.030 |

The weight gain results are presented in Figure 9, where it can be seen that the growth rate for the piglets fed diets 1 and 3 were comparable to each other, while the growth rate for the piglets fed diet 2 was less. Two key findings are made: first, the weight gain of the piglets on the optimised essential amino acid diet (diet 3) was comparable to the piglets on the control infant formula of diet 1, and in this regard it is noted that the protein levels of the two diets were significantly different; and second, the weight gain of the piglets on the optimised essential amino acid diet (diet 3) was greater compared to the piglets on the control infant formula of diet 2, and it is noted that the protein levels of the two diets were the same.

It should also be noted that the ratio of essential amino acids to non-essential amino acids in diet 3 was approximately 50:50 which is similar to that in diets 1 and 2, and also in line with the typical ratio of essential amino acids in human breast milk and commercially available formulas. Therefore, it is emphasised that diet 3 did not simply involve a lowering of the total essential amino acid levels relative to the non-essential amino acid levels in order to reduce the total level of protein.

These results therefore suggest that the new optimised essential amino acid composition allows for greater weight gain compared with a composition containing the same amount of total protein and a non-adjusted essential amino acid composition. The results also suggest that the new optimised essential amino acid composition allows for similar weight gain compared with a composition containing a higher amount of total protein and a non-adjusted essential amino acid composition. Furthermore, these findings cannot be explained by a relative increase or the essential amino acids (because the ratio of essential amino acids to non-essential amino acids in all three diets was approximately 50:50) but by a change in the ratio of all essential amino acids.

Furthermore, the organ development in the piglets of this study was investigated. No adverse developmental effects were detected in the piglets on the optimised essential amino acid diet (diet 3) relative to the control infant formula (diet 1). This suggests that 20% reduction of the protein load with an optimised amino acid composition does not induce any acute growth deficits or disproportional growth effects in the piglets.

As such, using the new optimised amino acid composition may allow for effective lowering of protein levels in infant formula.

## REFERENCES

1. Baird J., Fisher D., Lucas P., Kleijnen J., Roberts H., Law C., "Being big or growing fast: Systematic review of size and growth in infancy and later obesity." Br Med J 2005: 331(7522); 929-931.

2. Benevenga N.J., and Steele R.D., "Adverse effects of excessive consumption of amino acids." Annu Rev Nutr 1984: 4; 157-81.

3. Boehm G., Cervantes H., Georgi G., Jelinek J., Sawatzki G., Wermuth B., Colombo J.P., "Effect of increasing dietary threonine intakes on amino acid metabolism of the central nervous system and peripheral tissues in growing rats." Pediatr Res 1998 Dec: 44(6); 900-6.

4. Castagné V., Moënnoz D., Finot P.A., Maire J.C., "Effects of diet-induced hyperthreoninemia. I). Amino acid levels in the central nervous system and peripheral tissues." Life Sci 1993: 53(24); 1803-10.

5. Crill, C.M. and Helms, R.A., "The use of carnitine in pediatric nutrition." Nutr Clin Pract 2007: 22(2); 204-13.

6. Darling, P.B. et al., "Threonine kinetics in preterm infants fed their mothers' milk or formula with various ratios of whey to casein" Am J Clin Nutr 1999 Jan: 69(1); 105-114.

7. Dennison B.A., Edmunds L.S., Stratton H.H., Pruzek R.M., "Rapid infant weight gain predicts childhood overweight." Obesity 2006: 14(3); 491-499.

8. Dewey et al., "Growth of breastfed and formula-fed infants from 0 to 18 months." Pediatrics 1992: 89; 1035-1041.

9. Dewey, K.G., "Growth characteristics of breast-fed compared to formula-fed infants." Biol Neonate 1998: 74(2); 94-105.

10. Dörner G., Bewer G., Lubs H., "Changes of the plasma tryptophan to neutral amino acids ratio in formula-fed infants: possible effects on brain development" Exp Clin Endocrinol 1983 Nov: 82(3); 368-71.

11. Fomon S.J., et al., "Infant formula with protein-energy ratio of 1.7 g/100 kcal is adequate but may not be safe." J Pediatr Gastroenterol Nutr 1999: 28(5); 495-501.

12. Gale, C. et al., "Effect of breastfeeding compared with formula feeding on infant body composition: a systematic review and meta-analysis." Am J Clin Nutr 2012: 95(3); 656-69.

13. Günther A.L., Buyken A.E., Kroke A., "Protein intake during the period of complementary feeding and early childhood and the association with body mass index and percentage body fat at 7 y of age." Am J Clin Nutr 2007 Jun: 85(6); 1626-33.

14. Harper A.E., Benevenga N.J., and Wohlhueter R.M., "Effects of ingestion of disproportionate amounts of amino acids." Physiol Rev 1970: 50(3); 428-558.

15. Harvey M.S., et al., "Infantile hypermethioninemia and hyperhomocysteinemia due to high methionine intake: a diagnostic trap." Mol Genet Metab 2003: 79(1); 6-16.

16. Hayasaka S., Hara S., Mizuno K., Narisawa K., Tada K., "Leber's congenital amaurosis associated with hyperthreoninemia" Am J Opthamol 1986: 101; 475-479.

17. Heine W., Radke M., Wutzke K. D., Peters E., Kundt G., "a-Lactalbumin-enriched low-protein infant formulas: a comparison to breast milk feeding" Acta Pediatr 1996: 85; 1024-1028.

18. Heine W.E., "The significance of tryptophan in infant nutrition" Adv Exp Med Biol 1999: 467; 705-10.

19. Heinig, M.J. et al., "Energy and protein intakes of breast-fed and formula-fed infants during the first year of life and their association with growth velocity: the DARLING Study." Am J Clin Nutr 1993: 58(2); 152-61.

20. Hogeveen M., et al., "Hyperhomocysteinemia as risk factor for ischemic and hemorrhagic stroke in newborn infants." J Pediatr 2002 141(3); 429-31.

21. Iiboshi, Y., et al., "Total parenteral nutrition decreases luminal mucous gel and increases permeability of small intestine." JPEN J Parenter Enteral Nutr 1994: 18(4); 346-50.

22. Koletzko, B. et al., "Global Standards for the Composition of Infant Formula: Recommendations of an ESPGHAN Coordinated International Expert Group" JPGN2005 Nov: 41; 584-599.

23. Koletzko, B. et al., "Lower protein in infant formula is associated with lower weight up to age 2 y: a randomized clinical trial" Am J Clin Nutr 2009: 89; 1-10.

24. Koopmans S.J., Ruis M., Dekker R., Korte M., "Surplus dietary tryptophan inhibits stress hormone kinetics and induces insulin resistance in pigs." Physiol Behav 2009 Oct 19: 98(4); 402-410.

25. Kötting W.F., Bubenzer S., Helmbold K., Eisert A., Gaber T.J., Zepf F.D., "Effects of tryptophan depletion on reactive aggression and aggressive decision-making in young people with ADHD." Acta Psychiatr Scand 2012 Aug 22. doi: 10.1111/acps.12001.

26. Law, G.K., et al., "Adequate oral threonine is critical for mucin production and gut function in neonatal piglets." Am J Physiol Gastrointest Liver Physiol 2007: 292(5); G1293-301.

27. Lien E.L., "Infant formulas with increased concentrations of alpha-lactalbumin." Am J Clin Nutr 2003 Jun: 77(6); 1555S-1558S.

28. Mato, J.M., et al., "S-Adenosylmethionine: a control switch that regulates liver function." FASEB J 2002: 16(1); 15-26.

29. Melnik, B.C., "Excessive Leucine-mTORC1-Signalling of Cow Milk-Based Infant Formula: The Missing Link to Understand Early Childhood Obesity" Journal of Obesity 2012. doi: 10.1155/2012/197653.

30. Metges, C.C. et al., "Kinetics of L-[1-(13)C]leucine when ingested with free amino acids, unlabeled or intrinsically labeled casein" Am J Physiol Endocrinol Metab 2000: 278(6); E1000-9.

31. Ong K.K., Emmett P., Northstone K., Golding J., Rogers I., Ness A.R., et al. "Infancy weight gain predicts childhood body fat and age at menarche in girls." J Clin Endocrinol Metab 2009: 94(5); 1527-1532.

32. Reddi O.S., "Threoninemia. A new metabolic defect" J. Pediatr 1978: 93; 814-816.

33. Rzehak P., Sausenthaler S., Koletzko S., Reinhardt D., von Berg A., Krämer U., Berdel D., Bollrath C., Grübl A., Bauer C.P., Wichmann H.E., Heinrich J., "Short- and long-term effects of feeding hydrolyzed protein infant formulas on growth at < or = 6 y of age: results from the German Infant Nutritional Intervention Study." Am J Clin Nutr 2009 Jun: 89(6); 1846-56.

34. Riccio, O., Jacobshagen M., Golding B., Vutskits L., Jabaudon D., Hornung J.P., Dayer A.G., "Excess of serotonin affects neocortical pyramidal neuron migration." Transl Psychiatry 2011 Oct 11: 1;e47, doi: 10.1038/tp.2011.49.

35. Rieber N., Mischler D., Schumacher V., Muth E., Bischoff S., Klosterhalfen S., Zipfel S., Enck P., "Acute tryptophan depletion increases experimental nausea but also induces hunger in healthy female subjects" Neurogastroeneterol Motil 2010 Jul: 22(7); 752-7.

36. Riedijk M.A., Voortman G., van Goudoever J.B., "Use of [13C]bicarbonate for metabolic studies in preterm infants: intragastric versus intravenous administration." Pediatr Res 2005: 58; 861-4.

37. Rigo J., Boehm G., Georgi G., Jelinek J., Nyambugabo K., Sawatzki G., Studzinski F., "An Infant Formula Free of Glycomacropeptide Prevents Hyperthreoninemia in Formula-Fed Preterm Infants" JPGN 2001: 32; 127-130.

38. Taveras E.M., Rifas-Shiman S.L., Belfort M.B., Kleinman K.P., Oken E., Gillman M.W., "Weight status in the first 6 months of life and obesity at 3 years of age." Pediatrics 2009: 123(4); 1177-1183.

39. Trabulsi J., Capeding R., Lebumfacil J., Ramanujam K., Feng P., McSweeney S., Harris B., DeRusso P., "Effect of an α-lactalbumin-enriched infant formula with lower protein on growth." Eur J Clin Nutr 2011 Feb: 65(2); 167-74.

40. Tzoulaki I., Sovio U., Pillas D., Hartikainen A-., Pouta A., Laitinen J., et al. "Relation of immediate postnatal growth with obesity and related metabolic risk factors in adulthood." Am J Epidemiol 2010: 171(9); 989-998

41. Sandström O., Lönnerdal B., Graverholt G., Hernell O., "Effects of alpha-lactalbumin-enriched formula containing different concentrations of glycomacropeptide on infant nutrition." Am J Clin Nutr 2008 Apr: 87(4); 921-8.

42. Shaw, V. and Lawson, M. Paediatric Dietetics 2001, 2nd ed. Oxford: Blackwell Science.

43. Silverwood R.J., De Stavola B.L., Cole T.J., Leon D.A., "BMI peak in infancy as a predictor for later BMI in the Uppsala Family Study." Int J Obes 2009: 33(8); 929-937.

44. Snyderman S.E., et al., "The plasma aminogram. I. Influence of the level of protein intake and a comparison of whole protein and amino acid diets." Pediatr Res 1968: 2(2); 131-44.

45. Socha P., Grote V., Gruszfeld D., Janas R., Demmelmair H., Closa-Monasterolo R., Subías J.E., Scaglioni S., Verduci E., Dain E., Langhendries J.P., Perrin E., Koletzko B., "Milk protein intake, the metabolic-endocrine response, and growth in infancy: data from a randomized clinical trial." Am J Clin Nutr 2011 Dec: 94(6 Suppl); 1776S-1784S.

46. Suryawan A., Davis T.A., "Regulation of protein synthesis by amino acids in muscle of neonates" Front Biosci 2011: 16; 1445-1460.

47. Tome, D. and Bos, C., "Lysine requirement through the human life cycle." J Nutr 2007: 137(6 Suppl 2); 1642S-1645S.

48. van der Schoor, S.R. et al., "Validation of the direct nasopharyngeal sampling method for collection of expired air in preterm neonates." Pediatr Res 2004: 55(1); 50-54.

49. van der Schoor, S.R., et al., "The gut takes nearly all: threonine kinetics in infants." Am J Clin Nutr 2007: 86(4); 1132-8.

50. van Goudoever J.B., Sulkers E.J., Chapman T.E., et al. "Glucose kinetics and glucoregulatory hormone levels in ventilated preterm infants on the first day of life." Pediatr Res 1993: 33; 583-9.

51. van Loon L.J., et al., "Ingestion of protein hydrolysate and amino acid-carbohydrate mixtures increases post exercise plasma insulin responses in men." J Nutr 2000: 130(10); 2508 - 13.

52. Vergnes M., Kempf E., "Tryptophan deprivation: effects on mouse-killing and reactivity in the rat." Pharmacol Biochem Behav 1981: 14 Suppl 1; 19-23.

53. Viadel, B., et al., "Amino acid profile of milk-based infant formulas." Int J Food Sci Nutr 2000: 51(5); 367-72.

54. WHO MULTICENTRE GROWTH REFERENCE STUDY GROUP "WHO Child Growth Standards based on length/height, weight and age" Acta Paediatrica 2006: Suppl 450; 76-85.

55. WHO/FAO/UNU, Protein and amino acid requirements in human nutrition. WHO Technical Report Series, 2007(935): p. 1-265.

56. Zello, G.A. et al., "Dietary lysine requirement of young adult males determined by oxidation of 1-[1-13C]phenylalanine" Am J Physiol Endocrinol Metab 1993: 264; E677-E685.

In this document and in its claims, the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one".

**Claims**

1. An infant or follow-on formula comprising a proteinaceous composition comprising:

   a) 3.2-5.0 g threonine per 100 g protein;
   b) 0.7-1.1 g tryptophan per 100 g protein;
   c) a ratio of tryptophan to the sum of all neutral amino acids isoleucine, leucine, valine, phenylalanine, tyrosine, and methionine of from 0.030 to 0.025; and
   d) 5.0-7.8 g isoleucine per 100 g protein, 6.6-10.3 g leucine per 100 g protein, 6.2-9.7 g lysine per 100 g protein, 1.8-2.8 g methionine per 100 g protein, and 5.2-8.1 g valine per 100 g protein,
   wherein the formula comprises a protein intake level of:

   - 1.4 to 1.8 g of protein per 100 kcal of formula; or
   - 0.9 to 1.2 g of protein per 100 ml of formula.

2. The formula of claim 1, further comprising 1.9 - 3.0 g histidine, 3.8 - 5.9 g phenylalanine, 1.2 - 4.0 g cysteine and 2.6 - 8.4 g tyrosine, per 100 g protein.

3. The formula according to claim 1 or 2, wherein the formula:

   a. comprises 45-52 mg threonine per 100 mL formula and/or
   b. comprises 10-12 mg tryptophan per 100 mL formula and/or
   c. provides, or is formulated to provide threonine in an amount of 68-78 mg / kg body weight / day; and/or
   d. provides, or is formulated to provide tryptophan in an amount of 15-17 mg / kg body weight / day.

4. The formula of claim 3, comprising 45-52 mg threonine per 100 mL formula and 10-12 mg tryptophan per 100 mL formula.

5. The formula of claim 4, wherein the formula provides, or is formulated to provide threonine in an amount of 68-78 mg / kg body weight / day and the formula provides, or is formulated to provide tryptophan in an amount of 15-17 mg / kg body weight /day.

6. A non-therapeutic method for promoting, assisting or achieving growth or development of an infant's body, comprising administering to said infant the formula according to any one of claims 1 - 5.

**Patentansprüche**

1. Säuglings- oder Säuglingsfolgenahrung, umfassend eine proteinhaltige Zusammensetzung, umfassend:

  a) 3,2-5,0 g Threonin pro 100 g Protein;
  b) 0,7-1,1 g Trypthophan pro 100 g Protein;
  c) ein Verhältnis von Tryptophan zur Summe aller neutralen Aminosäuren Isoleucin, Leucin, Valin, Phenylalanin, Tyrosin und Methionin von 0,030 bis 0,025; und
  d) 5,0-7,8 g Isoleucin pro 100 g Protein, 6,6-10,3 g Leucin pro 100 g Protein, 6,2-9,7 g Lysin pro 100 g Protein, 1,8-2,8 g Methionin pro 100 g Protein und 5,2-8,1 g Valin pro 100 g Protein,
  wobei die Nahrung ein Proteinaufnahmelevel umfasst von:

    - 1,4 bis 1,8 g Protein pro 100 kcal der Nahrung; oder
    - 0,9 bis 1,2 g Protein pro 100 ml der Nahrung.

2. Nahrung nach Anspruch 1, ferner umfassend pro 100 g Protein 1,9 - 3,0 g Histidin, 3,8 - 5,9 g Phenylalanin, 1,2 - 4,0 g Cystein und 2,6 - 8,4 g Tyrosin.

3. Nahrung nach Anspruch 1 oder 2, wobei die Nahrung:

  a. 45-52 mg Threonin pro 100 ml Nahrung umfasst und/oder
  b. 10-12 mg Tryptophan pro 100 ml Nahrung umfasst und/oder
  c. Threonin in einer Menge von 68-78 mg / kg Körpergewicht / Tag bereitstellt oder zum Bereitstellen davon formuliert ist; und/oder
  d. Tryptophan in einer Menge von 15-17 mg / kg Körpergewicht / Tag bereitstellt oder zum Bereitstellen davon formuliert ist.

4. Nahrung nach Anspruch 3, umfassend 45-52 mg Threonin pro 100 ml Nahrung und 10-12 mg Tryptophan pro 100 ml Nahrung.

5. Nahrung nach Anspruch 4, wobei die Nahrung Threonin in einer Menge von 68-78 mg / kg Körpergewicht / Tag bereitstellt oder zum Bereitstellen davon formuliert ist und die Nahrung Tryptophan in einer Menge von 15-17 mg / kg Körpergewicht / Tag bereitstellt oder zum Bereitstellen davon formuliert ist.

6. Nicht-therapeutisches Verfahren zum Fördern, Unterstützen oder Erreichen von Wachstum oder Entwicklung eines Säuglingskörpers, umfassend das Verabreichen der Nahrung nach irgendeinem der Ansprüche 1 - 5 an den Säugling.

**Revendications**

1. Formule pour nourrissons ou de suite comprenant une composition protéinique comprenant :

  a) de 3,2 à 5,0 g de thréonine pour 100 g de protéines ;
  b) de 0,7 à 1,1 g de tryptophane pour 100 g de protéines ;
  c) un rapport du tryptophane à la somme de tous les acides aminés neutres isoleucine, leucine, valine, phénylalanine, tyrosine et méthionine de 0,030 à 0,025 ; et
  d) de 5,0 à 7,8 g d'isoleucine pour 100 g de protéine, de 6,6 à 10,3 g de leucine pour 100 g de protéine, de 6,2 à 9,7 g de lysine pour 100 g de protéine, de 1,8 à 2,8 g de méthionine pour 100 g de protéine, et de 5,2 à 8,1 g de valine pour 100 g de protéines,

  dans laquelle la formule comprend un niveau d'apport protéique de :

    - 1,4 à 1,8 g de protéines pour 100 kcal de formule ; ou
    - 0,9 à 1,2 g de protéines pour 100 ml de formule.

2. Formule selon la revendication 1, comprenant en outre de 1,9 à 3,0 g d'histidine, de 3,8 à 5,9 g de phénylalanine, de 1,2 à 4,0 g de cystéine et de 2,6 à 8,4 g de tyrosine, pour 100 g de protéine.

**3.** Formule selon la revendication 1 ou 2, dans laquelle la formule :

> a. comprend de 45 à 52 mg de thréonine pour 100 ml de formule et/ou
> b. comprend de 10 à 12 mg de tryptophane pour 100 ml de formule et/ou
> c. fournit ou est formulée pour fournir de la thréonine en une quantité de 68 à 78 mg/kg de poids de corps/jour ; et/ou
> d. fournit ou est formulée pour fournir du tryptophane en une quantité de 15 à 17 mg/kg de poids de corps/jour.

**4.** Formule selon la revendication 3, comprenant de 45 à 52 mg de thréonine pour 100 ml de formule et de 10 à 12 mg de tryptophane pour 100 ml de formule.

**5.** Formule selon, la revendication 4, dans laquelle la formule fournit, ou est formulée pour fournir de la thréonine en une quantité de 68 à 78 mg/kg de poids de corps/jour et la formule fournit, ou est formulée pour fournir du tryptophane en une quantité de 15 à 17 mg/kg de poids de corps/jour.

**6.** Procédé non thérapeutique pour favoriser, aider ou obtenir la croissance ou le développement d'un corps de nourrisson, comprenant l'administration audit nourrisson de la formule selon l'une quelconque des revendications 1 à 5.

Fig. 1

## Fig. 2

EP 2 922 414 B1

*Fig. 3*

EP 2 922 414 B1

Fig. 4

## Fig. 5

EP 2 922 414 B1

Fig. 6

## Fig. 7

EP 2 922 414 B1

*Fig. 8*

# Fig. 9

## REFERENCES CITED IN THE DESCRIPTION

### Patent documents cited in the description

- WO 2011119023 A1

- WO 2001041581 A

### Non-patent literature cited in the description

- **BAIRD J. ; FISHER D. ; LUCAS P. ; KLEIJNEN J. ; ROBERTS H. ; LAW C.** Being big or growing fast: Systematic review of size and growth in infancy and later obesity. *Br Med J,* 2005, vol. 331 (7522), 929-931
- **BENEVENGA N.J. ; STEELE R.D.** Adverse effects of excessive consumption of amino acids. *Annu Rev Nutr,* 1984, vol. 4, 157-81
- **BOEHM G. ; CERVANTES H. ; GEORGI G. ; JELINEK J. ; SAWATZKI G. ; WERMUTH B. ; COLOMBO J.P.** Effect of increasing dietary threonine intakes on amino acid metabolism of the central nervous system and peripheral tissues in growing rats. *Pediatr Res,* December 1998, vol. 44 (6), 900-6
- **CASTAGNÉ V. ; MOËNNOZ D. ; FINOT P.A. ; MAIRE J.C.** Effects of diet-induced hyperthreoninemia. I). Amino acid levels in the central nervous system and peripheral tissues. *Life Sci,* 1993, vol. 53 (24), 1803-10
- **CRILL, C.M. ; HELMS, R.A.** The use of carnitine in pediatric nutrition. *Nutr Clin Pract,* 2007, vol. 22 (2), 204-13
- **DARLING, P.B. et al.** Threonine kinetics in preterm infants fed their mothers' milk or formula with various ratios of whey to casein. *Am J Clin Nutr,* January 1999, vol. 69 (1), 105-114
- **DENNISON B.A. ; EDMUNDS L.S. ; STRATTON H.H. ; PRUZEK R.M.** Rapid infant weight gain predicts childhood overweight. *Obesity,* 2006, vol. 14 (3), 491-499
- **DEWEY et al.** Growth of breastfed and formula-fed infants from 0 to 18 months. *Pediatrics,* 1992, vol. 89, 1035-1041
- **DEWEY, K.G.** Growth characteristics of breast-fed compared to formula-fed infants. *Biol Neonate,* 1998, vol. 74 (2), 94-105
- **DÖRNER G. ; BEWER G. ; LUBS H.** Changes of the plasma tryptophan to neutral amino acids ratio in formula-fed infants: possible effects on brain development. *Exp Clin Endocrinol,* November 1983, vol. 82 (3), 368-71

- **FOMON S.J. et al.** Infant formula with protein-energy ratio of 1.7 g/100 kcal is adequate but may not be safe. *J Pediatr Gastroenterol Nutr,* 1999, vol. 28 (5), 495-501
- **GALE, C. et al.** Effect of breastfeeding compared with formula feeding on infant body composition: a systematic review and meta-analysis. *Am J Clin Nutr,* 2012, vol. 95 (3), 656-69
- **GÜNTHER A.L. ; BUYKEN A.E. ; KROKE A.** Protein intake during the period of complementary feeding and early childhood and the association with body mass index and percentage body fat at 7 y of age. *Am J Clin Nutr,* June 2007, vol. 85 (6), 1626-33
- **HARPER A.E. ; BENEVENGA N.J. ; WOHLHUETER R.M.** Effects of ingestion of disproportionate amounts of amino acids. *Physiol Rev,* 1970, vol. 50 (3), 428-558
- **HARVEY M.S. et al.** Infantile hypermethioninemia and hyperhomocysteinemia due to high methionine intake: a diagnostic trap. *Mol Genet Metab,* 2003, vol. 79 (1), 6-16
- **HAYASAKA S. ; HARA S. ; MIZUNO K. ; NARISAWA K. ; TADA K.** Leber's congenital amaurosis associated with hyperthreoninemia. *Am J Opthamol,* 1986, vol. 101, 475-479
- **HEINE W. ; RADKE M. ; WUTZKE K. D. ; PETERS E. ; KUNDT G.** a-Lactalbumin-enriched low-protein infant formulas: a comparison to breast milk feeding. *Acta Pediatr,* 1996, vol. 85, 1024-1028
- **HEINE W.E.** The significance of tryptophan in infant nutrition. *Adv Exp Med Biol,* 1999, vol. 467, 705-10
- **HEINIG, M.J. et al.** Energy and protein intakes of breast-fed and formula-fed infants during the first year of life and their association with growth velocity: the DARLING Study. *Am J Clin Nutr,* 1993, vol. 58 (2), 152-61
- **HOGEVEEN M. et al.** Hyperhomocysteinemia as risk factor for ischemic and hemorrhagic stroke in newborn infants. *J Pediatr,* 2002, vol. 141 (3), 429-31

- **IIBOSHI, Y. et al.** Total parenteral nutrition decreases luminal mucous gel and increases permeability of small intestine. *JPEN J Parenter Enteral Nutr,* 1994, vol. 18 (4), 346-50
- **KOLETZKO, B. et al.** Global Standards for the Composition of Infant Formula: Recommendations of an ESPGHAN Coordinated International Expert Group. *JPGN,* November 2005, vol. 41, 584-599
- **KOLETZKO, B. et al.** Lower protein in infant formula is associated with lower weight up to age 2 y: a randomized clinical trial. *Am J Clin Nutr,* 2009, vol. 89, 1-10
- **KOOPMANS S.J. ; RUIS M. ; DEKKER R. ; KORTE M.** Surplus dietary tryptophan inhibits stress hormone kinetics and induces insulin resistance in pigs. *Physiol Behav,* 19 October 2009, vol. 98 (4), 402-410
- **KÖTTING W.F. ; BUBENZER S. ; HELMBOLD K. ; EISERT A. ; GABER T.J. ; ZEPF F.D.** Effects of tryptophan depletion on reactive aggression and aggressive decision-making in young people with ADHD. *Acta Psychiatr Scand,* 22 August 2012
- **LAW, G.K. et al.** Adequate oral threonine is critical for mucin production and gut function in neonatal piglets. *Am J Physiol Gastrointest Liver Physiol,* 2007, vol. 292 (5), 1293-301
- **LIEN E.L.** Infant formulas with increased concentrations of alpha-lactalbumin. *Am J Clin Nutr,* June 2003, vol. 77 (6), 1555S-1558S
- **MATO, J.M. et al.** S-Adenosylmethionine: a control switch that regulates liver function. *FASEB J,* 2002, vol. 16 (1), 15-26
- **MELNIK, B.C.** Excessive Leucine-mTORC1-Signalling of Cow Milk-Based Infant Formula: The Missing Link to Understand Early Childhood Obesity. *Journal of Obesity,* 2012
- **METGES, C.C. et al.** Kinetics of L-[1-(13)C]leucine when ingested with free amino acids, unlabeled or intrinsically labeled casein. *Am J Physiol Endocrinol Metab,* 2000, vol. 278 (6), E1000-9
- **ONG K.K. ; EMMETT P. ; NORTHSTONE K. ; GOLDING J. ; ROGERS I. ; NESS A.R. et al.** Infancy weight gain predicts childhood body fat and age at menarche in girls. *J Clin Endocrinol Metab,* 2009, vol. 94 (5), 1527-1532
- **REDDI O.S.** Threoninemia. A new metabolic defect. *J. Pediatr,* 1978, vol. 93, 814-816
- **RZEHAK P. ; SAUSENTHALER S. ; KOLETZKO S. ; REINHARDT D. ; VON BERG A. ; KRÄMER U. ; BERDEL D. ; BOLLRATH C. ; GRÜBL A. ; BAUER C.P.** Short- and long-term effects of feeding hydrolyzed protein infant formulas on growth at < or = 6 y of age: results from the German Infant Nutritional Intervention Study. *Am J Clin Nutr,* June 2009, vol. 89 (6), 1846-56
- **RICCIO, O. ; JACOBSHAGEN M. ; GOLDING B. ; VUTSKITS L. ; JABAUDON D. ; HORNUNG J.P ; DAYER A.G.** Excess of serotonin affects neocortical pyramidal neuron migration. *Transl Psychiatry,* 11 October 2011, vol. 1, e47
- **RIEBER N. ; MISCHLER D. ; SCHUMACHER V. ; MUTH E. ; BISCHOFF S. ; KLOSTERHALFEN S. ; ZIPFEL S. ; ENCK P.** Acute tryptophan depletion increases experimental nausea but also induces hunger in healthy female subjects. *Neurogastroeneterol Motil,* July 2010, vol. 22 (7), 752-7
- **RIEDIJK M.A. ; VOORTMAN G. ; VAN GOUDOEVER J.B.** Use of [13C]bicarbonate for metabolic studies in preterm infants: intragastric versus intravenous administration. *Pediatr Res,* 2005, vol. 58, 861-4
- **RIGO J. ; BOEHM G. ; GEORGI G. ; JELINEK J. ; NYAMBUGABO K. ; SAWATZKI G. ; STUDZINSKI F.** An Infant Formula Free of Glycomacropeptide Prevents Hyperthreoninemia in Formula-Fed Preterm Infants. *JPGN,* 2001, vol. 32, 127-130
- **TAVERAS E.M. ; RIFAS-SHIMAN S.L. ; BELFORT M.B. ; KLEINMAN K.P. ; OKEN E. ; GILLMAN M.W.** Weight status in the first 6 months of life and obesity at 3 years of age. *Pediatrics,* 2009, vol. 123 (4), 1177-1183
- **TRABULSI J. ; CAPEDING R. ; LEBUMFACIL J. ; RAMANUJAM K. ; FENG P. ; MCSWEENEY S. ; HARRIS B. ; DERUSSO P.** Effect of an α-lactalbumin-enriched infant formula with lower protein on growth. *Eur J Clin Nutr,* February 2011, vol. 65 (2), 167-74
- **TZOULAKI I. ; SOVIO U. ; PILLAS D. ; HARTIKAINEN A-. ; POUTA A. ; LAITINEN J. et al.** Relation of immediate postnatal growth with obesity and related metabolic risk factors in adulthood. *Am J Epidemiol,* 2010, vol. 171 (9), 989-998
- **SANDSTRÖM O. ; LÖNNERDAL B. ; GRAVERHOLT G. ; HERNELL O.** Effects of alpha-lactalbumin-enriched formula containing different concentrations of glycomacropeptide on infant nutrition. *Am J Clin Nutr,* April 2008, vol. 87 (4), 921-8
- **SHAW, V. ; LAWSON, M.** Paediatric Dietetics. Blackwell Science, 2001
- **SILVERWOOD R.J. ; DE STAVOLA B.L. ; COLE T.J. ; LEON D.A.** BMI peak in infancy as a predictor for later BMI in the Uppsala Family Study. *Int J Obes,* 2009, vol. 33 (8), 929-937
- **SNYDERMAN S.E. et al.** The plasma aminogram. I. Influence of the level of protein intake and a comparison of whole protein and amino acid diets. *Pediatr Res,* 1968, vol. 2 (2), 131-44

- **SOCHA P. ; GROTE V. ; GRUSZFELD D. ; JANAS R. ; DEMMELMAIR H. ; CLOSA-MONASTEROLO R. ; SUBÍAS J.E. ; SCAGLIONI S. ; VERDUCI E. ; DAIN E.** Milk protein intake, the metabolic-endocrine response, and growth in infancy: data from a randomized clinical trial. *Am J Clin Nutr,* December 2011, vol. 94 (6), 1776S-1784S
- **SURYAWAN A. ; DAVIS T.A.** Regulation of protein synthesis by amino acids in muscle of neonates. *Front Biosci,* 2011, vol. 16, 1445-1460
- **TOME, D. ; BOS, C.** Lysine requirement through the human life cycle. *J Nutr,* 2007, vol. 137 (2), 1642S-1645S
- **VAN DER SCHOOR, S.R. et al.** Validation of the direct nasopharyngeal sampling method for collection of expired air in preterm neonates. *Pediatr Res,* 2004, vol. 55 (1), 50-54
- **VAN DER SCHOOR, S.R. et al.** The gut takes nearly all: threonine kinetics in infants. *Am J Clin Nutr,* 2007, vol. 86 (4), 1132-8
- **VAN GOUDOEVER J.B. ; SULKERS E.J. ; CHAPMAN T.E. et al.** Glucose kinetics and glucoregulatory hormone levels in ventilated preterm infants on the first day of life. *Pediatr Res,* 1993, vol. 33, 583-9
- **VAN LOON L.J. et al.** Ingestion of protein hydrolysate and amino acid-carbohydrate mixtures increases post exercise plasma insulin responses in men. *J Nutr,* 2000, vol. 130 (10), 2508-13
- **VERGNES M. ; KEMPF E.** Tryptophan deprivation: effects on mouse-killing and reactivity in the rat. *Pharmacol Biochem Behav,* 1981, vol. 14 (1), 19-23
- **VIADEL, B. et al.** Amino acid profile of milk-based infant formulas. *Int J Food Sci Nutr,* 2000, vol. 51 (5), 367-72
- WHO Child Growth Standards based on length/height, weight and age. Acta Paediatrica. WHO MULTICENTRE GROWTH REFERENCE STUDY GROUP, 2006, 76-85
- Protein and amino acid requirements in human nutrition. WHO Technical Report Series. WHO/FAO/UNU, 2007, vol. 935, 1-265
- **ZELLO, G.A. et al.** Dietary lysine requirement of young adult males determined by oxidation of 1-[1-13C]phenylalanine. *Am J Physiol Endocrinol Metab,* 1993, vol. 264, E677-E685